# EUROPÄISCHE PATENTSCHRIFT

(11) **EP 3 899 253 B1**
(45) Veröffentlichungstag und Bekanntmachung des Hinweises auf die Patenterteilung: **26.06.2024**
(21) Anmeldenummer: 19827678.4
(22) Anmeldetag: 16.12.2019
(51) Int. Cl.: F03D 7/02, F03D 17/00

(54) **VERFAHREN ZUM ERFASSEN UNTERSCHIEDLICHER SCHWINGUNGEN EINER WINDENERGIEANLAGE**
METHOD FOR DETECTING DIFFERENT VIBRATIONS OF A WIND TURBINE
PROCÉDÉ DE DÉTECTION DE VIBRATIONS DIFFÉRENTES D'UNE ÉOLIENNE

(30) Priorität: 17.12.2018 DE 102018132413
(43) Veröffentlichungstag der Anmeldung: 27.10.2021
(73) Patentinhaber: Wobben Properties GmbH, 26607 Aurich (DE)
(72) Erfinder: WEGMANN, Harald, 26487 Neuschoo (DE); DE BOER, Wolfgang, 26802 Moormerland (DE)
(74) Vertreter: Eisenführ Speiser
(86) Internationale Anmeldenummer: PCT/EP2019/085331
(87) Internationale Veröffentlichungsnummer: WO 2020/127034

(56) Entgegenhaltungen:
- DE-A1-102008 023 109
- US-A1- 2006 066 111

## Beschreibung

Die vorliegende Erfindung betrifft ein Verfahren zum Erfassen mehrerer Schwingungen einer Windenergieanlage. Die Erfindung betrifft auch ein Verfahren zum Betreiben einer Windenergieanlage, bei dem mehrere Schwingungen erfasst werden. Außerdem betrifft die vorliegende Erfindung auch eine Windenergieanlage.

Windenergieanlagen sind bekannt, sie erzeugen elektrische Leistung aus Wind. Beim Betrieb einer solchen Windenergieanlage können aber Störungen auftreten, auf die zum Schutz der Windenergieanlage überwacht wird. Eine mögliche Störung ist ein zu starkes Schwingen des Turmes, nämlich im Bereich des Turmkopfes und damit im Bereich der auf dem Turmkopf gelagerten Gondel der Windenergieanlage. Eine solche Schwingung kann durch eine Anregung durch Wind in einer entsprechenden Resonanzfrequenz entstehen und so hohe Amplituden erreichen, dass zum Schutz der Windenergieanlage diese zumindest teilweise abgeschaltet werden muss. Eine solche Turmschwingung, die zum Abschalten einer Windenergieanlage führt, kann aber bspw. auch durch ein Erdbeben ausgelöst werden. Auch dann kann je nach Schwingungsamplitude der Betrieb der Windenergieanlage beendet oder zumindest unterbrochen werden. Sobald diese starke Schwingung vorüber ist, kann die Windenergieanlage, ggf. auch voll automatisch, wieder in Betrieb genommen werden.

Zum Erfassen solcher Turmschwingungen kann ein Beschleunigungssensor oben auf der Gondel der Windenergieanlage angeordnet sein. Er erfasst Beschleunigungen, die ein Berechnen der Turmbewegung ermöglicht. Das ist bspw. beschrieben in der Patentschrift US 6,876,099.

Eine weitere mögliche Störung kann eine mechanische Schwingung des Generators sein.

Besonders bei getriebelosen Windenergieanlagen dreht sich der elektrodynamische Rotor des Generators genauso schnell wie der aerodynamische Rotor, nämlich etwa im Bereich von 5 bis 20 U/min. Treten hier bspw. Unwuchten auf, kann das ebenfalls eine Gefährdung der Windenergieanlage darstellen. Und auch hier kann abhängig einer solchen erfassten Schwingung eine Schutzmaßnahme eingeleitet werden, die im äußersten Falle das Anhalten der Windenergieanlage bedeuten kann.

So gibt es viele potenzielle Störquellen an einer modernen und damit komplexen Windenergieanlage, deren Überwachung einen hohen Aufwand an Sensortechnik bedeuten kann. Dabei ist zu beachten, dass schon heute eine solche Windenergieanlage mit sehr vielen Sensoren ausgestattet ist, um möglichst viele Eventualitäten erfassen zu können. Solche Sensoren können aber sowohl Anschaffungskosten als auch Wartungskosten einer solchen Windenergieanlage erhöhen. Dennoch ist grundsätzlich empfehlenswert, hochwertige Sensoren einzusetzen, um wiederum einen Ausfall der Sensoren zu vermeiden und auch möglichst zuverlässige Messwerte zu gewährleisten. Solche Anforderungen führen allerdings wiederum zu einem Kostenanstieg statt einer Kostenverringerung.

Das Deutsche Patent- und Markenamt hat in der Prioritätsanmeldung zur vorliegenden Anmeldung folgenden Stand der Technik recherchiert: DE 10 2007 011 835 A1, DE 10 2016 203 013 A1, US 6 876 099 B2, US 2014 / 0 122 011 A1, US 2017 / 0 306 926 A1 und US 2017 / 0 363 072 A1. Weiterer Stand der Technik ist in US 2006/066111 A1 offenbart.

Der vorliegenden Erfindung liegt somit die Aufgabe zugrunde, zumindest eines der o.g.

Probleme zu adressieren. Insbesondere soll eine Lösung vorgeschlagen werden, bei der möglichst zuverlässig mechanische Schwingungen überwacht werden können, während Kosten möglichst niedrig gehalten werden. Zumindest soll zu bisher bekannten Lösungen eine alternative Lösung vorgeschlagen werden.

Erfindungsgemäß wird ein Verfahren gemäß Anspruch 1 vorgeschlagen. Somit wird ein Verfahren zum Erfassen mehrerer Schwingungen einer Windenergieanlage vorgeschlagen. Es geht also um die Erfassung mechanischer Schwingungen einer Windenergieanlage und es wird eine Windenergieanlage zugrunde gelegt, die einen eine Generatorachse aufweisenden Generator zum Erzeugen elektrischer Leistung aus Wind hat, sowie eine Gondel zum Tragen des Generators. Außerdem ist ein Turm vorgesehen zum Tragen der Gondel. Für eine solche Windenergieanlage wird vorgeschlagen, dass eine Turmschwingung mit einem Schwingungsaufnehmer erfasst wird und eine durch elektrische Fehler ausgelöste mechanische Generatorschwingung mit demselben Schwingungsaufnehmer erfasst wird.

Eine durch elektrische Fehler ausgelöste mechanische Generatorschwingung ist eine, bei der bspw. durch einen Teilkurzschluss oder anderen elektrischen Fehler eine Unregelmäßigkeit im elektrischen Feld entsteht. Dadurch läuft der Generator dann nicht mehr gleichmäßig, was auch als unrunder Lauf bezeichnet werden kann. Ein solches ungleichmäßiges Laufen bedingt durch einen elektrischen Fehler unterscheidet sich von einem unrunden Laufen aufgrund einer Unwucht. Eine Unwucht führt zu einer periodischen Belastung mit einer Frequenz entsprechend der Rotordrehzahl, wohingegen eine durch elektrische Fehler ausgelöste mechanische Generatorschwingung zu einer Belastung mit einer höheren Frequenz führen kann. Eine durch elektrische Fehler ausgelöste mechanische Generatorschwingung kann auch zu einer eher ruckelnden Bewegung führen, wohingegen eine Unwucht zu einem im wesentlichen sinusförmigen Belastungsverlauf bzw. zu einer sinusförmigen Schwingbewegung führt.

Hier wurde besonders erkannt, dass eine Turmschwingung und eine durch elektrische Fehler ausgelöste mechanische Generatorschwingungen, die nachfolgend vereinfachend als Generatorschwingung bezeichnet wird, hinsichtlich zu erwartender Frequenzen und Amplituden eine solche Ähnlichkeit aufweisen, dass eine Erfassung sowohl der Turmschwingung als auch der Generatorschwingung durch denselben Sensor erfolgen kann. Gleichzeitig wurde aber auch erkannt, dass Turmschwingungen und mechanische Generatorschwingungen gleichwohl so unterschiedlich sind, dass sie trotz Erfassung durch ein und denselben Schwingungsaufnehmer unterschieden werden können.

Somit können dem Grunde nach und auch ihrer Ursache nach unterschiedliche mechanische Schwingungen mit ein und demselben, insbesondere einem etablierten Schwingungsaufnehmer erfasst werden. Dadurch können, durch entsprechende Vermeidung eines zweiten Sensors Kosten gespart werden, wohingegen aber gleichzeitig der verbleibende eine Schwingungsaufnehmer eine hohe Güte aufweisen kann. Somit kann trotz Einsparung des Sensors eine zuverlässige Schwingungserfassung sowohl für die Turmschwingung als auch für die Generatorschwingung erreicht werden.

Besonders wird vorgeschlagen, dass das Betreiben der Windenergieanlage die erfasste Turmschwingung und die erfasste mechanische Generatorschwingung berücksichtigt. Insbesondere wird vorgeschlagen, dass das Steuern der Windenergieanlage in Abhängigkeit der erfassten Turmschwingung und der erfassten Generatorschwingung durchgeführt wird. Besonders kann sowohl abhängig der erfassten Turmschwingung als auch abhängig der erfassten Generatorschwingung eine Generatordrehzahl angepasst werden.

Dabei wurde besonders auch erkannt, dass die Turmschwingung mit der mechanischen Generatorschwingung im Zusammenhang stehen kann. Bspw. kann die durch wenigstens einen elektrischen Fehler ausgelöste mechanische Generatorschwingung eine Turmschwingung anregen, selbst wenn diese bspw. nur die halbe Frequenz gegenüber der Generatorschwingung ausweist. Durch die gemeinsame Erfassung mit demselben Schwingungsaufnehmer können somit systematische Messfehler, besonders Messverzögerungen, vermieden werden bzw. sie werden dadurch irrelevant, verlieren zumindest an Bedeutung, wenn sie für beide erfassten Schwingungen gleichermaßen vorhanden sind. Besonders bei einem Vergleich beider Schwingungen können sich solche systematischen Fehler aufheben.

Das kann besonders bei dem Vergleich von Phasenlagen von Wichtigkeit sein. Werden nämlich für beide Schwingungen Phasenlagen erfasst, kann die Phasenverschiebung zwischen diesen beiden Schwingungen durch unterschiedliche Messaufnehmer verfälscht werden. Wird derselbe Messaufnehmer verwendet, besteht dieses Problem grundsätzlich nicht. Eine solche Phasenverschiebung kann dabei auch zwischen der Grundschwingung und der einen Schwingungsart einerseits und einer Oberwelle einer anderen Schwingungsart andererseits bestehen.

Eine wichtige Berücksichtigung der erfassten Turmschwingung und der erfassten mechanischen Generatorschwingung zum Betreiben einer Windenergieanlage besteht darin, in einem Störfall, der durch diese Schwingungen erkannt werden kann, die Windenergieanlage ggf. in ihrem Betriebspunkt zu verändern, besonders ihre Drehzahl, also die Drehzahl des aerodynamischen Rotors, zu verändern, besonders zu reduzieren. Dabei kommt auch eine Reduzierung der Drehzahl auf null in Betracht.

Gemäßder Erfindung wird vorgeschlagen, dass der Schwingungsaufnehmer als Beschleunigungssensor ausgebildet ist. Hier liegt besonders der Gedanke zugrunde, dass ein verschleißfreier oder verschleißarmer Sensor verwendet werden kann, weil die Messung der Beschleunigung zum Erfassen einer mechanischen Schwingung ausreichen kann. Besonders wurde auch erkannt, dass nicht nur eine Turmbewegung über einen Beschleunigungssensor erfasst werden kann, sondern auch eine Generatorschwingung. Besonders die Verwendung eines Dehnungsmessstreifens, dessen Messgenauigkeit auch von der Qualität der Befestigung abhängt, kann vermieden werden. Es wurde besonders auch erkannt, dass durch die Verwendung eines Beschleunigungssensors sowohl die Turmschwingung als auch die mechanische Generatorschwingung erfasst werden kann. Um dieses Ergebnis der gemeinsamen Schwingungserfassung mit einem Dehnungsmessstreifen oder Dehnungssensor erreichen zu können, müsste ein solcher an einer Position angeordnet werden, an der sowohl die Generatorschwingung als auch die Turmschwingung zu einer Dehnung führt. Es wurde aber erkannt, dass eine solche Messposition schwer zu finden ist. Eine Turmschwingung könnte mit einem Dehnungsmessstreifen an einer Position am Turmfuß gut erfasst werden, wohingegen eine Generatorschwingung möglicherweise durch Messung einer Dehnung eines Elementes erfasst werden kann, dass zwischen Stator und dem rotorlagerndem Achszapfen angeordnet wäre. Es wurde aber erkannt, dass eine solche Lösung kompliziert wäre und sich ein Beschleunigungssensor für die gemeinsame Erfassung von Turmschwingung und mechanischer Generatorschwingung eignet.

Erfindungsgemäß wird vorgeschlagen, dass der Beschleunigungssensor eine Beschleunigung in wenigstens zwei Richtungen erfasst, idealerweise in zwei orthogonal zueinander stehenden Richtungen. Damit kann stufenlos eine im Grunde beliebige Schwingungsrichtung erkannt werden, die sich nämlich aus diesen beiden erfassten, orthogonal zueinander stehenden Schwingungen zusammensetzt.

Auch hierzu wurde erkannt, dass ein Beschleunigungssensor an ein und derselben Stelle beide Schwingungsrichtung aufnehmen kann und damit die sich ergebende bzw. zugrundeliegende gemeinsame Schwingungsrichtung erfassen kann. Es wurde auch erkannt, dass dies auch einzeln für jede der beiden Schwingungsarten möglich ist, nämlich sowohl für die Turmschwingung als auch für die mechanische Generatorschwingung. Sofern in jeder erfassten Richtung die jeweilige Schwingung aus dem Signal extrahiert wird, also die Turmschwingung einerseits und die Generatorschwingung andererseits, kann sowohl für die Turmschwingung als auch für die Generatorschwingung jeweils eine eigene Schwingungsrichtung erkannt werden. Im Übrigen betreffen auch jegliche nachfolgenden Erläuterungen einer Generatorschwingung grundsätzlich eine mechanische Generatorschwingung.

Gemäß einer Ausführungsform wird vorgeschlagen, dass der Schwingungsaufnehmer an dem Generator, insbesondere an einem Stator des Generators angeordnet ist. Üblicherweise weist ein solcher Generator nur einen Stator auf und an dem kann dieser Schwingungsaufnehmer angeordnet sein. Er nimmt dann dort mechanische Schwingungen des Generators auf, da er unmittelbar mit dem Generator verbunden ist. Gleichzeitig nimmt er aber auch Turmschwingungen auf, denn die gesamte Gondel und damit auch der Generator, schwingt mit dem Turm. Die Position des Schwingungsaufnehmers am Stator des Generators ist somit nicht nur zum Erfassen der mechanischen Generatorschwingung günstig, sondern auch zum Erfassen der Turmschwingung.

Dabei wurde erkannt, dass es nicht erforderlich ist, zum Erfassen der Turmschwingung den Sensor am Turm anzubringen, und dass es selbst auch nicht erforderlich ist, den Sensor, sollte er an der Gondel angebracht werden, mittig zum Turm anzuordnen, ihn also im Wesentlichen in einer Flucht der Längsachse des Turms anzuordnen, also über der Turmachse. Vielmehr wurde erkannt, dass gerade die Position im Bereich des Generators, der jedenfalls bei modernen getriebelosen Windenergieanlagen weit über einen Turmkopfbereich hinausreicht, Turmschwingungen besonders in Nickrichtung der Gondel bzw. des Generators sehr gut erfassen können, weil die Turmschwingung an der Position sogar noch ausgeprägter wahrgenommen werden kann bzw. durch eine Gondelbewegung verstärkt werden kann. Aber auch Schwingungen quer zur Nickrichtung werden an der Position nicht signifikant schlechter aufgenommen als an einer Position mittig über dem Turm, was hier somit erkannt wurde.

Außerdem oder alternativ wird vorgeschlagen, dass der Schwingungsaufnehmer an einem den Stator des Generators tragenden Statorträger angeordnet wird. Ein solcher Statorträger befindet sich auch in unmittelbarer Nähe des Generators und kann Generatorschwingungen gut übertragen. Ein solcher Statorträger kann derart starr und nah an dem Stator angeordnet sein, dass er auch als Teil des Stators angesehen werden kann. In dem Fall wäre der Schwingungsaufnehmer somit an dem Stator und gleichzeitig dem Statorträger angeordnet. Somit gelten für diese Position dieselben vorteilhaften Wirkungen, wie vorstehend zur Position am Startor des Generators erläutert wurden.

Gleiches gilt auch für eine vorgeschlagene Position des Schwingungsaufnehmers in einem vorderen Teil der Gondel und/oder in einem Bereich vor der Turmachse. Gemäß einer Ausführungsform wird nämlich vorgeschlagen, den Schwingungsaufnehmer in einen vorderen Teil der Gondel anzuordnen und damit kann der Schwingungsaufnehmer in der Nähe des Generators oder sogar an dem Generator angeordnet werden. Eine Anordnung an dem Stator des Generators und/oder an dem tragenden Statorträger ist bei einer getriebelosen Windenergieanlagen, die hier vorzugsweise vorgeschlagen wird, in dem vorderen Teil der Gondel. Als vorderer Teil der Gondel wird ein Bereich zum aerodynamischen Rotor hin bezeichnet. Hierbei wird davon ausgegangen, dass die Windenergieanlage als sog. Luvläufer ausgebildet ist. Für denselben Fall eines Leeläufers wäre sinngemäß von einer Anordnung in einem hinteren Teil der Gondel auszugehen. Der Bereich vor der Turmachse ist somit auch ein Bereich im vorderen Teil der Gondel, und den Sensor dort anzuordnen hat entsprechend gleiche Vorteile wie zur Anordnung im vorderen Teil der Gondel erläutert wurde.

Gemäß einer Ausführungsform wird vorgeschlagen, dass ein Längsschwingungssignal und ein Querschwingungssignal erfasst werden. Das Längsschwingungssignal ist dabei in eine Längsrichtung der Generatorachse gerichtet und das Querschwingungssignal ist in eine Richtung quer zur Längsrichtung gerichtet. Insbesondere werden beide Schwingungsrichtungen in einer horizontalen Ebene erfasst. Dabei wurde erkannt, dass eine Turmschwingung, nämlich besonders eine Schwingung des Turmkopfes, im Wesentlichen in einer horizontalen Ebene stattfindet. Diese Schwingungsrichtung kann dann in dieser horizontalen Ebene in einer Richtung schwingen, also bspw. von Nord nach Süd oder von Nordost nach Südwest, um nur zwei anschauliche Beispiele zu nennen. Selbstverständlich kann sich diese Schwingungsrichtung auch ändern.

Der Generator kann einerseits eine Schwingung im Sinne einer Exzentrizität durchführen, die somit zu einer Schwingung bzw. mehrerer Schwingungen quer zur Drehachse führt. Somit kann als Teil davon auch eine vertikale Schwingrichtung beim Generator auftreten. Dazu wurde aber erkannt, dass eine solche quasi exzentrische Schwingung, also eine Schwingung quer zur Drehachse des Generators auch eine horizontale Komponente, aber weiterhin quer zur Drehachse, aufweist. Besonders wurde erkannt, dass eine solche Schwingrichtung, nämlich quer zur Drehachse, dominant ist bzw. überwiegend zu erwarten ist. Diese kann gut mit dem Aufnehmen einer Schwingung in eine horizontale Richtung, nämlich quer zur Drehachse aufgenommen werden.

Zusätzlich kann der Generator besonders auch eine Schwingung in Art einer Kipprichtung aufweisen, die aber, besonders im Bereich des Luftspalts des Generators, im Wesentlichen als Schwingung in Längsrichtung der Drehachse des Generators aufgenommen wird. Diese ist dann somit auch eine Richtung in einer horizontalen Ebene und dabei quer zu der zuvor beschriebenen Schwingrichtung, die ebenfalls in der horizontalen Ebene aber quer zur Längsachse ausgebildet ist.

Somit wurde erkannt, dass sowohl für die Turmschwingung als auch für die Generatorschwingung die Aufnahme zweier Schwingungsrichtungen in einer horizontalen Ebene geeignet ist. Obwohl also die Turmschwingung in ihrer Richtung sich bereits der Art nach von der Schwingung bzw. möglicher Schwingungen des Generators unterscheidet, wurde erkannt, dass gleichwohl diese beiden der Art nach unterschiedlichen Schwingungen mit demselben Schwingungsaufnehmer erfasst werden können. Das macht sich die vorgeschlagene Erfindung zunutze, selbst für die Betrachtung und Erfassung der Schwingungsrichtungen.

Dennoch kann natürlich vorgesehen sein, besonders für den Generator auch eine vertikale Komponente zu erfassen. Die bevorzugte Ausführungsform, die zwei Schwingungsrichtungen in einer horizontalen Ebene erfasst, kommt allerdings ohne eine Erfassung einer solchen vertikalen dritten Komponente aus.

Gemäß einer Ausführungsform wird vorgeschlagen, dass wenigstens ein von dem Schwingungsaufnehmer aufgenommenes Schwingungssignal frequenzabhängig in ein Turmschwingungssignal und ein Generatorschwingungssignal aufgetrennt wird, wobei insbesondere eine Filtereinrichtung verwendet wird und unterhalb einer vorgebbaren Trennfrequenz liegende Frequenzanteile als Turmschwingungssignal verwendet werden und oberhalb der Trennfrequenz liegende Frequenzanteile als Generatorschwingungssignal verwendet werden. Hier wurde besonders erkannt, dass durch eine einfache Frequenzaufteilung ein gemeinsam aufgenommenes Schwingungssignal in Signalanteile der Turmschwingung bzw. der Generatorschwingung aufgeteilt werden kann. Dabei kann ein aufgenommenes Schwingungssignal ein Längsschwingungssignal sein und ein weiteres aufgenommenes Schwingungssignal ein Querschwingungssignal sein. Diese Signale können dann weiterverarbeitet werden, nämlich abhängig davon, ob sie jeweils der Turmschwingung oder der Generatorschwingung zugeordnet werden. Die Filtereinrichtung kann einen Hochpassfilter und einen Tiefpassfilter aufweisen und sie kann als digitale Filtereinrichtung in einem Prozessrechner implementiert sein.

Für die Generatorschwingung wird vorgeschlagen, dass diese in einen Frequenzbereich von 2 bis 20 Hz erfasst wird. Daher ist besonders vorteilhaft eine Trennfrequenz im Bereich zwischen 1,25 und 2 Hz anzusetzen. Bspw. kann eine Trennfrequenz von 1,5 Hz zugrunde gelegt werden.

Vorzugsweise wird die Trennfrequenz in Abhängigkeit einer aktuellen Rotordrehzahl und damit Generatordrehzahl vorgegeben. Hier wurde besonders erkannt, dass diese Frequenz zum Auftrennen zwischen Turmschwingung und Generatorschwingung von der Drehzahl des Rotors bzw. Generators abhängen kann. Besonders kann die Frequenz der Generatorschwingung von der Rotordrehzahl abhängen, wobei die Frequenz der Turmschwingung besonders von einer Turmeigenfrequenz abhängen kann, und weniger von der Rotordrehzahl. Bei einer höheren Rotordrehzahl ergibt sich dann ein größerer Frequenzabstand zwischen beiden Schwingungsarten, der auch eine Veränderung der Trennfrequenz sinnvoll machen kann.

Gemäß einer Ausführungsform wird vorgeschlagen, dass als wenigstens eine Turmschwingung eine Turmlängsschwingung und eine Turmquerschwingung erfasst wird. Als Turmlängsschwingung wird eine Schwingung des Turmes bezeichnet, die in Längsrichtung der Generatorachse gerichtet ist. Als Turmquerschwingung wird eine Schwingung des Turmes in einer Richtung quer zur Generatorachse bezeichnet, die dabei aber auch in einer horizontalen Ebene schwingt, als auch quer zur Turmachse gerichtet ist.

Eine Turmlängsschwingung, die auch als Turmnickschwingung bezeichnet werden kann, wird besonders durch den Wind ausgelöst, nämlich besonders dadurch, dass dieser auf einen aerodynamischen Rotor der Windenergieanlage einwirkt. Der aerodynamische Rotor wird nachfolgend auch vereinfachend als Rotor bezeichnet.

Die Turmquerschwingung kann besonders durch eine Unwucht des Rotors entstehen.

Alle drei Schwingungen, also die durch wenigstens einen elektrischen Fehler ausgelöste mechanische Generatorschwingung, die Turmlängsschwingung und die Turmquerschwingung, werden mit demselben Schwingungsaufnehmer aufgenommen. Es wurde erkannt, dass trotzdem alle drei Schwingungen unterschieden werden können. Das ist dadurch möglich, dass die Turmschwingungen von der mechanischen Generatorschwingung durch ihre unterschiedlichen Frequenzen unterschieden werden können und die beiden Turmschwingungen durch ihre Richtungen voneinander unterschieden werden können.

Gemäß einer Ausführungsform wird vorgeschlagen, dass das Steuern der Windenergieanlage funktional aufgeteilt ist in eine Arbeitspunktsteuerung und eine Schutzsteuerung. Hier wird besonders vorgeschlagen, dass beide Steuerungsbereiche strikt voneinander getrennt sind.

Die Arbeitspunktsteuerung ist vorgesehen zum Steuern der Windenergieanlage in einem Arbeitspunkt. Sie steuert besonders in Abhängigkeit der Windgeschwindigkeit die Windenergieanlage mit einer dieser Windgeschwindigkeit angemessenen Drehzahl und einer dieser Windgeschwindigkeit angemessenen Leistungsabgabe. Diese Arbeitspunktsteuerung bildet insoweit eine Normalsteuerung. Ändert sich der Wind, wird dies erfasst, und entsprechend kann sich der Arbeitspunkt ändern, wenn bspw. im Teillastbetrieb die Windgeschwindigkeit abfällt und sich der Betriebspunkt zu einem Betriebspunkt mit geringerer Drehzahl als vorher und geringerer Abgabeleistung als vorher verändert.

Die Schutzsteuerung ist dieser Arbeitspunktsteuerung hierarchisch übergeordnet und ist dazu vorgesehen, Schutzfunktionen der Windenergieanlage zu überprüfen. Die hierarchische Überordnung bedeutet, dass sich die Arbeitspunktsteuerung der Schutzsteuerung unterzuordnen hat. Sieht also die Schutzsteuerung eine andere Drehzahl vor als die Arbeitspunktsteuerung, insbesondere wenn die Schutzsteuerung ein Reduzieren der Drehzahl auf null vorsieht, hat sich die Arbeitspunktsteuerung dem unterzuordnen und es wird dann nicht die Drehzahl gesteuert, die die Arbeitspunktsteuerung vorschlagen würde. Insbesondere wird die bis dahin von der Arbeitspunktsteuerung vorgegebene Drehzahl verlassen.

Besonders ist vorgesehen, dass die Schutzsteuerung auf Störkriterien prüft und bei Erkennen eines vorbestimmten Störkriteriums die Arbeitspunktsteuerung übernimmt und in Abhängigkeit des erkannten Störkriteriums einen gesicherten Arbeitspunkt anfährt. Ein solcher gesicherter Arbeitspunkt kann besonders bedeuten, dass eine Drehung des Rotors der Windenergieanlage auf null reduziert wird. Es kann aber auch bedeuten, dass die Windenergieanlage mit einer geringeren Drehzahl weiter betrieben wird. Im Übrigen ist hier unter Drehzahl grundsätzlich die Rotordrehzahl des aerodynamischen Rotors zu verstehen, die aber der Drehzahl des Generators entspricht, insoweit eine getriebelose Windenergieanlage zugrunde gelegt wird.

Somit kann auch die Schutzsteuerung zur Turmschwingungsüberwachung und zur Generatorschwingungsüberwachung ein und denselben Schwingungsaufnehmer verwenden bzw. Informationen oder Signale von ein und demselben Schwingungsaufnehmer auswerten. Dabei wird gleichwohl zwischen Turmschwingung und Generatorschwingung unterschieden und es werden auch unterschiedliche Grenzwerte zugrunde gelegt. Es wurde aber erkannt, dass die Verwendung ein und desselben Schwingungsaufnehmers gleichwohl möglich ist und damit einen geringen Aufwand hinsichtlich des Vorsehens des Schwingungsaufnehmers ermöglicht.

Gemäß einer Ausgestaltung wird vorgeschlagen, dass die Schutzsteuerung als ausfallsichere Steuerung ausgebildet ist. Insbesondere wird dabei vorgeschlagen, dass die Arbeitspunktsteuerung nicht als ausfallsichere Steuerung ausgebildet ist. Dem liegt der Gedanke zugrunde, dass eine aufwendige ausfallsichere Steuerung nur für die Schutzsteuerung vorzusehen ist. Damit kann die Windenergieanlage über die Arbeitspunktsteuerung teilweise über komplexe Steuerungs- und Regelungsvorgänge gesteuert und geführt werden, ohne dass dafür mit ähnlichem Aufwand eine Ausfallsicherheit gewährleistet zu werden braucht.

Gleichwohl können essentielle Sicherheitsfunktionen ausfallsicher gemacht werden, indem sich die Ausfallsicherheit und damit die entsprechenden und teilweise aufwändigen Maßnahmen, auf die Schutzsteuerung konzentrieren oder sogar auf die Schutzsteuerung beschränken. Besonders kann eine solche Ausfallsicherheit über eine Redundanz erreicht werden und diese Redundanz braucht nur für die Schutzsteuerung vorgesehen zu werden. Der Betrieb ist insoweit mit einem hohen Sicherheitsstandard bei gleichwohl vertretbarem Aufwand realisierbar.

Außerdem oder alternativ ist vorgesehen, dass die Schutzsteuerung eine Haupt- und eine Nebensteuerung aufweist, wobei die Hauptsteuerung die Schutzsteuerung ausführt und die Nebensteuerung die Schutzsteuerung oder einen Teil davon übernimmt, wenn die Hauptsteuerung ganz oder teilweise ausfällt. Hierdurch kann die genannte ausfallsichere Steuerung erreicht werden.

Eine Variante ist dabei, dass die Hauptsteuerung und die Nebensteuerung gleichzeitig ausgeführt werden. Übernimmt also die Schutzsteuerung bei Erkennen eines Störkriteriums, führt sie die Hauptsteuerung und die Nebensteuerung gleichzeitig aus, damit diese beide das Ansteuern des sicheren Arbeitspunktes durchführen. Das kann z.B. bedeuten, dass beide das Herunterfahren der Windenergieanlage Initiieren, indem beide z.B. eine vorprogrammierte oder anders vorbereitete Notverstellung der Rotorblätter auslösen.

Besonders wird vorzugsweise vorgeschlagen, dass die Hauptsteuerung und die Nebensteuerung ähnlich oder sogar identisch oder zumindest fast identisch ausgebildet sein können, um dadurch eine Redundanz zu erreichen. Eine Redundanz kann aber auch vorzugsweise dadurch erreicht werden, dass zwei unterschiedliche Systeme dasselbe oder ähnliches erreichen können.

Bspw. wird vorgeschlagen, dass im Falle einer Störung, wenn die Drehzahl auf null reduziert werden muss, dies die Schutzsteuerung unter Verwendung ihrer Hauptsteuerung durchführt. Dabei beinhaltet eine solche Reduzierung der Drehzahl auf null, die Rotorblätter in eine Fahnenstellung zu drehen. Hierzu kann die Hauptsteuerung die Rotorblätter über einen vorprogrammierten Blattwinkel-Zeitverlauf in ihre Fahnenstellung bringen. Fällt selbst die Hauptsteuerung der Schutzsteuerung aus, kann die Nebensteuerung die Rotorblätter stattdessen in Fahnenstellung bringen, aber möglicherweise auf eine einfachere Art und Weise, z.B. in dem die entsprechenden Verstellmotoren mit einer konstanten Eingangsspannung oder einem konstanten Eingangsstrom versehen werden, um dadurch ein im Wesentlichen konstantes Verstellmoment zu erzeugen, mit dem die Rotorblätter in Fahnenstellung gedreht werden, bis sie einen mechanischen Endschalter erreichen.

Das ist als ein veranschaulichendes Beispiel für verschiedene Aktionen zu verstehen, die in einem Störfall, wenn also eine Störung erkannt wurde, durchzuführen sind. Hierüber wird eine Ausfallsicherheit erreicht, weil dem der Gedanke zugrunde liegt, dass nicht anzunehmen ist, dass Haupt- und Nebensteuerung zugleich ausfallen, besonders dann nicht, wenn die Nebensteuerung außerdem noch einfacher aufgebaut ist und daher eine geringe Störanfälligkeit aufweist.

Für die Arbeitspunktsteuerung ist all dies vorzugsweise nicht vorgesehen. Für die Arbeitspunktsteuerung kann es dann nämlich ausreichen, anzunehmen, dass diese störungsfrei arbeitet. Die Arbeitspunktsteuerung braucht auf Störungen nicht vorbereitet zu sein. Treten signifikante Störungen auf, kann dann die Schutzsteuerung übernehmen, die dazu der Arbeitspunktsteuerung hierarchisch übergeordnet ist. In einem solchen Störfall, der grundsätzlich selten auftritt, wird dann der Arbeitspunktsteuerung die Erlaubnis und Fähigkeit zum Steuern temporär entzogen und die Schutzsteuerung übernimmt, bis die erkannte Störung behoben ist und die Windenergieanlage wieder normal arbeiten kann und darf.

Gemäß einer Ausführungsform wird vorgeschlagen, dass auf eine Störung erkannt wird, insbesondere, dass die Schutzsteuerung auf eine Störung erkennt, wenn die erfasste Turmschwingung einen vorbestimmten Turmschwingungsgrenzwert überschreitet, insbesondere wenn eine bzw. die Turmlängsschwingung einen vorbestimmten Turmlängsschwingungsgrenzwert überschreitet und/oder eine bzw. die Turmquerschwingung einen vorbestimmten Turmquerschwingungsgrenzwert überschreitet.

Die Schutzsteuerung, oder eine andere Einheit, kann auch dann auf eine Störung erkennen, wenn die erfasste Generatorschwingung einen vorbestimmten Generatorschwingungsgrenzwert überschreitet. Insbesondere wird hier vorgeschlagen, als erfasste Turmschwingung die Turmschwingungsamplitude der jeweiligen Turmschwingung zu verwenden, und/oder jeweils eine Beschleunigung zu betrachten, so dass der jeweilige Schwingungsgrenzwert einen Grenzwert einer Beschleunigung darstellt. Ebenso wird für die Betrachtung der Generatorschwingung hier vorgeschlagen, die Generatorschwingungsamplitude zu verwenden. Auch hier kann dafür die Beschleunigung der Generatorschwingung betrachtet werden. Insbesondere ist vorgesehen, dass der Turmschwingungsgrenzwert, der Turmlängsschwingungsgrenzwert und der Turmquerschwingungsgrenzwert jeweils andere sind, als der Generatorschwingungsgrenzwert. Insbesondere sind der Turmschwingungsgrenzwert, der Turmlängsschwingungsgrenzwert und der Turmquerschwingungsgrenzwert jeweils größer als der Generatorschwingungsgrenzwert, insbesondere sind der Turmschwingungsgrenzwert, der Turmlängsschwingungsgrenzwert und der Turmquerschwingungsgrenzwert jeweils wenigstens fünfmal so groß, wie der Generatorschwingungsgrenzwert.

Gemäß einer Ausgestaltung wird vorgeschlagen, dass für die Turmlängsschwingung, die Turmquerschwingung und/oder die Generatorschwingung jeweils ein Schwingungsverlauf überwacht wird, und
- für den Schwingungsverlauf jeweils geprüft wird, ob er ein erstes Schwingungstoleranzband verlässt, und
   - jedes Verlassen des ersten Schwingungstoleranzbandes zu einer Überschreitungssumme summiert oder integriert wird, und
   - wenn die Überschreitungssumme in einem vorbestimmten ersten Prüfzeitraum eine vorbestimmte Maximalsumme erreicht oder überschreitet,
      - die Windenergieanlage wegen einer Störung angehalten wird, oder
      - eine Schwingungswarnung ausgegeben wird und ein Anhalten der Windenergieanlage vom weiteren Verlauf des Schwingungsverlaufs abhängt, wobei insbesondere
         - in einem ersten Folgeschritt die Überschreitungssumme auf null gesetzt wird und
         - in einem zweiten Folgeschritt jedes Verlassen des ersten Schwingungstoleranzbandes erneut zur Überschreitungssumme summiert oder integriert wird, bis erneut eine Schwingungswarnung ausgegeben wird, wobei
         - dann der erste und zweite Folgeschritt wiederholt werden,
         - die dabei aufgetretenen Schwingungswarnungen gezählt werden und
         - überprüft wird, ob die in einem vorbestimmten zweiten Prüfzeitraum, der länger ist als der erste Prüfzeitraum, die Anzahl Schwingungswarnungen eine vorbestimmte Warnzahlgrenze erreicht hat und davon abhängig die Windenergieanlage wegen einer Störung angehalten wird oder weiterbetrieben wird.

Somit wird die Überwachung eines erstens Schwingungstoleranzbandes vorgeschlagen. Das Schwingungstoleranzband weist somit eine positive und einer negative Grenze auf, die die Schwingung nicht überschreiten bzw. nicht unterschreiten soll. Wird die Grenze dennoch über bzw. unterschritten, wird das Toleranzband also verlassen, so beginnt das Verfahren, dieses Über- bzw- Unterschreiten weiter zu beobachten und auszuwerten.

Die positive und negative Grenze weisen bevorzugt betragsmäßig denselben Wert auf, insbesondere nämlich den Generatorschwingungsgrenzwert oder den Turmschwingungsgrenzwert, bzw. den Turmlängsschwingungsgrenzwert oder den Turmquerschwingungsgrenzwert. Es können natürlich auch mehrere dieser Schwingungsarten gleichzeitig überwacht werden, insbesondere alle drei Schwingungsarten gleichzeitig und dann wird jeweils die entsprechende Grenz und damit der entsprechende Grenzwert verwendet.

Vorzugsweise können für den Generatorschwingungsgrenzwert und den Turmschwingungsgrenzwert, bzw. den Turmlängsschwingungsgrenzwert und den Turmquerschwingungsgrenzwert jeweils ein erster und ein zweiter Grenzwert vorgegeben sein, wobei der erste Grenzwert jeweils der Grenze des ersten Schwingungstoleranzbandes entsprechen kann und der zweite Grenzwert jeweils der Grenze eines unten noch beschriebenen zweiten Schwingungstoleranzbandes entsprechen kann.

Jedes Verlassen des ersten Schwingungstoleranzbandes, also jedes Über- bzw- Unterschreiten der betreffenden Grenze, wird erfasst und aufintegriert oder aufsummiert. Beim Aufintegrieren wird im Grunde die Fläche zwischen überschreitender bzw. unterschreitender Schwingungskurve und der betreffenden Grenze aufintegriert und mit einer vorbestimmten Maximalsumme verglichen. Es wurde erkannt, dass statt des Aufintegrierens solcher Flächeninhalte es meist ausreichen kann, lediglich eine Anzahl des Verlassens des Toleranzbandes, bzw. des Über- und Unterschreitens aufzunehmen, das Verlassen also nur zu zählen. In beiden Fällen wird das Ergebnis mit einer vorbestimmten Maximalsummer verglichen, deren Wert natürlich auch abhängig davon vorbestimmt wird, ob aufintegriert oder gezählt wird. Wird diese Maximalsumme erreicht oder überschritten, so wird von dem Vorliegen einer Störung ausgegangen, es wird also eine Störung erkannt.

Zur weiteren Auswertung werden aber zwei Varianten vorgeschlagen. Gemäß einer Variante erfolgt bei Erkennen der Störung ein Anhalten der Windenergieanlage, wobei das von dem Ausgeben eines entsprechenden Fehlersignals begleitet werden kann.

Gemäß einer anderen Variante wird bei Erkennen der Störung zunächst nur eine Schwingungswarnung, also ein Warnsignal, ausgegeben. Die Windenergieanlage kann dabei zunächst weiterbetrieben werden. Es wird aber das Schwingungsverhalten weiter überwacht.

Für die weitere Überwachung wird besonders vorgeschlagen, dass überwacht wird, ob eine solche Störung erneut auftritt, und besonders wie oft oder häufig sie auftritt. Dazu kann das Integrieren bzw. Aufsummieren, also das Zählen, zurückgesetzt werden, so dass es von vorn beginnt. Das kann dadurch erfolgen, dass die Überschreitungssumme auf null zurückgesetzt wird. Dann kann, wie vorstehend beschrieben wurde, durch Aufintegrieren bzw. Zählen auf eine erneute Störung geprüft werden.

Werden auf diese Weise weitere Störungen erkannt, so wird geprüft, wie häufig das passiert. Dafür wird ein zweiter Prüfzeitraum festgelegt, der länger ist, als der erste Prüfzeitraum. Der erste Prüfzeitraum kann bspw. eine Dauer im Bereich von 5 Stunden bis 2 Tagen haben, insbesondere die Dauer eines Tages, während der zweite Prüfzeitraum eine Dauer von 3 bis 14 Tagen haben kann, insbesondere eine Dauer von 7 Tagen.

Werden also innerhalb des zweiten Prüfzeitraums zu viele Störungen erkannt, wird in dem zweiten Prüfzeitraum also die Anzahl Schwingungswarnungen die vorbestimmte Warnzahlgrenze überschreiten, wird die Windenergieanlage wegen einer Störung angehalten. Die vorbestimmte Warnzahlgrenze kann in einem Bereich von 3 bis 10 liegen, insbesondere etwa 5 oder 6 betragen.

Wird diese Warnzahlgrenze aber in dem zweiten Prüfzeitraum nicht erreicht, kann auch diese Zählung der erkannten Störungen zurückgesetzt werden, nämlich entweder auf null reduziert werden, oder in vorbestimmten Reduzierungsintervallen, die z.B. einen Tag betragen können, um einen Zähler reduziert werden. Auch dadurch kann der Zähler bis auf null reduziert werden, wenn er bspw. auf vier angestiegen war, dann aber für vier Tage kein Störung mehr erkannt wurde. Die Werte werden nicht über null hinaus ins Negative reduziert.

Die Prüfung darauf, ob in dem vorbestimmten zweiten Prüfzeitraum die Anzahl der Schwingungswarnungen eine vorbestimmte Warnzahlgrenze erreicht hat, kann auch durch Wahl der Warnzahlgrenze und Wahl der Dauer des Reduzierungsintervalls erreicht werden. Beträgt die Warnzahlgrenze bspw. 4, und die Dauer des Reduzierungsintervalls einen Tag, so erfolgt ein Anhalten, wenn in einem Tag 4 Störungen erkannt wurden, in zwei Tagen 5 Störungen erkannt wurden, in drei Tagen 6 Störungen erkannt wurden, oder in vier Tagen 7 Störungen erkannt wurden. Eine maximal zulässige Anzahl von 7 Störungen in vier Tagen kann also dadurch erreicht werden, dass die Warnzahlgrenze auf 4, und die Dauer des Reduzierungsintervalls auf einen Tag vorbestimmt wird. Hierbei würde zwar auch auf eine Störung erkannt werden, wenn in kürzerer Zeit eine oder wenige Störungen weniger erkannt wurden, aber das ist ein vorteilhafter Effekt.

Vorzugsweise wird auf eine Störung erkannt und die Windenergieanlage angehalten, wenn der Schwingungsverlauf ein zweites Schwingungstoleranzband, das größer ist, als das erste Toleranzband, einmalig verlässt. Diese zweite Schwingungstoleranzband hat somit dem Betrage nach größere Grenzen, als das erste Schwingungstoleranzband. Wird es nur einmal verlassen, liegt eine so schwere Störung vor, dass die Windenergieanlage zu ihrem eigenen Schutz sofort, jedenfalls ohne weitere Prüfung der Schwingung, angehalten wird.

Dadurch kann eine wenigstens zweistufige Überwachung erreicht werden, die bei großen Schwingungen, die aber noch nicht unmittelbar die Windenergieanlage gefährden, zunächst nur eine Überwachung startet und den weiteren Verlauf der Schwingungen überwacht, die aber bei noch größeren Schwingungen, die die Windenergieanlage gefährden können, sofort zu einem Anhalten der Windenergieanlage führt.

Die beschriebenen Überwachung des Schwingungsverlaufs kann für jede beschriebene Schwingungsart unabhängig voneinander vorgenommen werden, wobei vorzugsweise unterschiedliche Werte für die Prüfkriterien vorgegeben werden.

Gemäß einer Ausführungsform wird vorgeschlagen, dass die zweistufige Prüfung auf eine Störung nur für die Turmschwingung durchgeführt wird, wohingegen für die Generatorschwingung eine einstufige Prüfung vorgesehen ist.

Vorzugsweise wird als Schwingungsverlauf jeweils ein Beschleunigungsverlauf überwacht. Auch für die Generatorschwingung kann vorzugsweise ein Beschleunigungsverlauf und damit eine Beschleunigung berücksichtigt werden, die dem Betrage nach einen Wert von 2 g nicht überschreiten soll. Entsprechend kann ein Grenzwert bei 2 g gesetzt werden, oder vorzugsweise im Bereich von 1 bis 2 g.

Vorzugsweise werden Turmschwingungen in Längs- und Querrichtung im Frequenzbereich von 0,1 bis 1,25 Hz erfasst. Dazu wird gemäß einer Ausführungsform vorgeschlagen, dass eine Trennfrequenz auf einen Wert oberhalb von 1,25 Hz gesetzt wird. Insbesondere wird als Trennfrequenz ein Wert von 1,25 bis 2 Hz vorgeschlagen.

Vorzugsweise wird vorgeschlagen, dass von der untersuchten Schwingung die jeweils maximale auftretende Beschleunigung erfasst wird. Dies kann vorzugsweise in Längs- und Querrichtung erfolgen. Für die Turmschwingung wird sowohl für die Längs- als auch für die Querrichtung jeweils vorgeschlagen, als Grenzwert einen Wert festzulegen, der dem Betrage nach der doppelten Erdbeschleunigung entspricht, also zwei g entspricht. Vorzugsweise wird ein niedrigerer Wert im Bereich von 1 bis 2 g als maximale Beschleunigung dem Betrage nach vorgegeben, wobei bei Erreichen dieses Grenzwertes ein Anhalten der Windenergieanlage ausgeführt wird, insbesondere eine Notverstellung der Rotorblätter in Fahnenstellung.

Erfindungsgemäß wird auch eine Windenergieanlage vorgeschlagen. Eine solche Windenergieanlage umfasst einen eine Generatorachse aufweisenden Generator zum Erzeugen elektrischer Leistung aus Wind, wobei der Generator durch einen aerodynamischen Rotor mit einem oder mehreren Rotorblättern antreibbar ist, eine Gondel zum Betreiben des Generators, einen Turm zum Tragen der Gondel, einen Schwingungsaufnehmer zum Erfassen einer Turmschwingung, wobei der Schwingungsaufnehmer auch vorbereitet ist zum Erfassen einer mechanischen Generatorschwingung, und eine Steuereinrichtung zum Steuern der Windenergieanlage in Abhängigkeit der erfassten Turmschwingung und in Abhängigkeit der erfassten Generatorschwingung.

Es wird somit eine Windenergieanlage vorgeschlagen, die dem vorstehend beschriebenen Verfahren zugrunde liegt, wobei das vorstehende Verfahren gemäß wenigstens einer beschriebenen Ausführungsform auf der Windenergieanlage implementiert ist. Insbesondere ist die Steuerung in der Steuereinrichtung implementiert. Die Steuereinrichtung kann besonders als Prozessrechner ausgebildet sein bzw. in einem Prozessrechner der Windenergieanlage implementiert sein.

Gemäß der Erfindung wird vorgeschlagen, dass die Windenergieanlage als getriebelose Windenergieanlage ausgebildet ist. Der aerodynamische Rotor treibt also unmittelbar den Generator an, nämlich seinen elektrodynamischen Rotor, der auch als Läufer bezeichnet wird. Das führt dazu, dass der Generator, der vorzugsweise als Synchrongenerator ausgebildet ist, ein langsam drehender Generator ist, insbesondere ein vielpoliger Generator. Dabei wird unter einem vielpoligen Generator insbesondere einer verstanden, der wenigstens 96 Statorpole aufweist. Ein solcher Generator einer getriebelosen Windenergieanlage führt damit auch zu einem potenziellen Schwingungsspektrum, das zwar höhere Frequenzen als das einer zu erwartenden Turmschwingung aufweist, gleichwohl das Spektrum, also der Frequenzbereich, in dem Schwingungen zu erwarten sind, deutlich näher an dem zu erwartender Turmschwingungen liegt.

Besonders wird angenommen, dass ein solcher Generator eine Nenndrehzahl unterhalb von 20 U/min aufweist. Damit unterscheidet er sich signifikant von einem Generator einer getriebebehafteten Windenergieanlage, dessen Drehzahl regelmäßig im Bereich von 1500 bis 3000 U/min liegen kann. Darüber hinaus ist der Generator einer getriebelosen Windenergieanlage üblicherweise in einem Bereich vor dem Turm der Windenergieanlage angeordnet, jedenfalls bezogen auf den oberen Turmbereich. Damit ist auch ein Schwingungsaufnehmer, der im Bereich des Generators angeordnet ist, in einem solchen Bereich angeordnet.

Erfindungsgemäß ist der Schwingungsaufnehmer als Beschleunigungssensor ausgebildet, und dazu vorbereitet, eine Beschleunigung in wenigstens zwei Richtungen zu erfassen, insbesondere in zwei im Wesentlichen zueinander orthogonal angeordnete Richtungen in einer horizontalen Ebene. Das hat die Vorteile, die oben bereits im Zusammenhang mit entsprechenden Ausführungsformen des Verfahrens erläutert wurden.

Gemäß einer weiteren Ausgestaltung wird vorgeschlagen, dass der Schwingungsaufnehmer an dem Generator, insbesondere an einem Stator des Generators, an einem dem Generator tragenden Generatorträger und/oder in einem vorderen Teil der Gondel angeordnet ist. Auch hierzu wird zu weiteren Erläuterungen auf vorstehend bereits gemachte Erläuterungen zu entsprechenden Ausführungsformen des entsprechenden Verfahrens verwiesen.

Nachfolgend wird die Erfindung beispielhaft anhand von Ausführungsformen unter Bezugnahme auf die begleitenden Figuren näher erläutert.
- Figur 1: zeigt eine Windenergieanlage in einer perspektivischen Darstellung.
- Figur 2: zeigt schematisch einen Teil einer Windenergieanlage in einer Seitenansicht.
- Figur 3: zeigt schematisch eine Mess- und Steuerstruktur zum Betreiben einer Windenergieanlage unter Berücksichtigung einer Schwingungsmessung.
- Figur 4: zeigt schematisch einen möglichen Schwingungsverlauf zum Veranschaulichen möglicher Auslösekriterien zum Erkennen einer Störung.

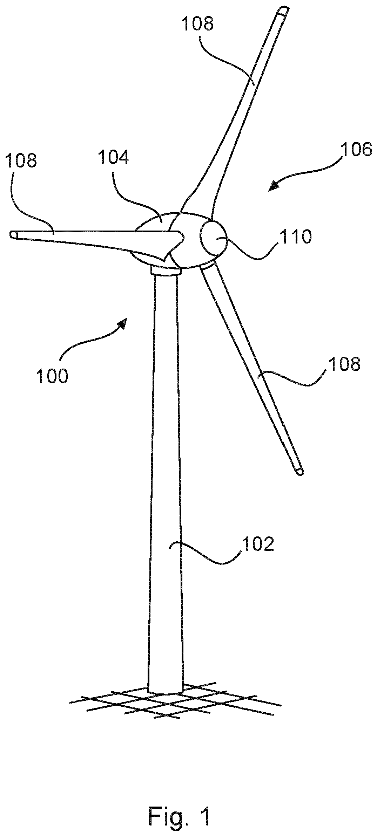

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

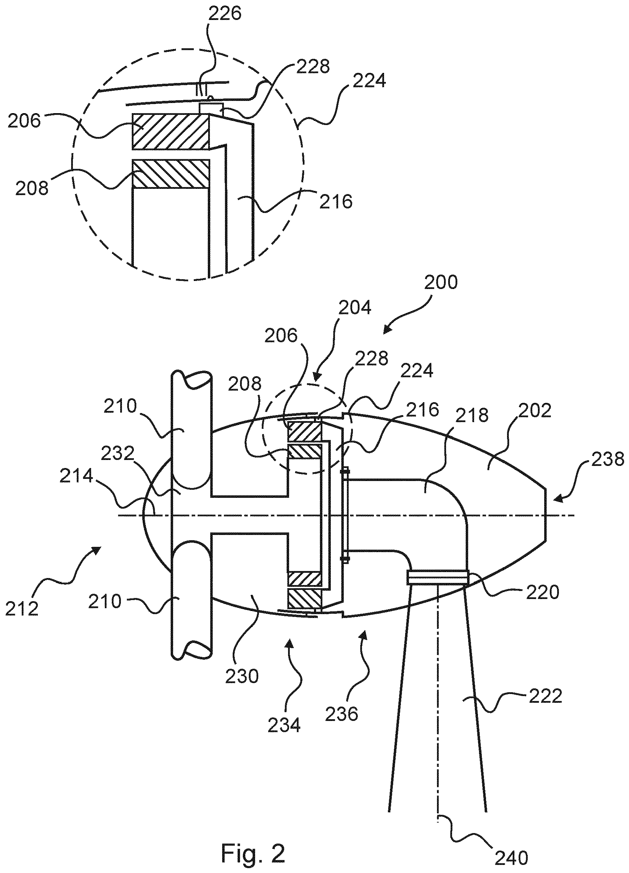

Figur 2 zeigt schematisch einen Ausschnitt einer Windenergieanlage 200 mit einer Gondel 202 und einem Generator 204. Der Generator 204 weist einen Stator 206 und einen Läufer 208 auf. Der Läufer 208 ist direkt mit drei Rotorblättern 210 gekoppelt, die nur teilweise, nur schematisch und von denen nur zwei dargestellt sind, weil sich das dritte Rotorblatt in der dargestellten Position auf der abgewandten Seite der Gondel 202 befindet.

Der Generator 204 ist somit als Innenläufer ausgebildet und da dieser Läufer 208 unmittelbar mit den Rotorblättern 210 und damit dem aerodynamischen Rotor 212 verbunden ist, liegt eine getriebelose Windenergieanlage vor. Der Läufer 208 dreht sich dann im Betrieb relativ zum Stator 206 und dabei um eine Generatorachse 214. Die Generatorachse 214 ist damit auch gleichzeitig die Drehachse des Rotors 212. Etwaige Lager sind der Einfachheit halber in Figur 2 nicht dargestellt.

Der Stator 206 ist über einen Statorträger 216 an einen Maschinenträger 218 befestigt. Der Maschinenträger 218 ist über ein Azimutlager 220 auf dem Turm 222 drehbar gelagert.

Figur 2 zeigt auch einen Vergrößerungsausschnitt 224. Neben einer umlaufenden Bürstendichtung 226 ist ein Schwingungsaufnehmer 228 gezeigt, der als Beschleunigungssensor ausgebildet ist. Dieser Schwingungsaufnehmer 228 ist dabei andem Stator 206 und damit an dem Generator 204 angeordnet und befestigt. Der Schwingungsaufnehmer 228 ist gleichzeitig an dem Statorträger 216 angeordnet.

In der Figur 2 ist dabei, in der Gesamtansicht, ebenfalls zu entnehmen, dass der Schwingungsaufnehmer 228 in einem vorderen Teil der Gondel 202 angeordnet ist. Dabei ist zu beachten, dass in dieser Figur 2 der drehende Teil, nämlich der sog. Spinner 230, deutlich länger als üblich gezeichnet ist. Üblicherweise ist der Abstand zwischen den Rotorblättern 210 bzw. der Nabe 232 an der sie befestigt sind, zum Läufer 208 deutlich kürzer. Als vorderer Teil 234 kann der Gondelteil bezeichnet werden, der sich an den Maschinenträger 218 anschließt, und in dem der Generator 204 einschließlich Statorträger 216 angeordnet ist. Dem entgegen reicht der hintere Teil 236 der Gondel etwa vom Verbindungsbereich zwischen Maschinenträger 218 und Statorträger 216, nach hinten bis zum Lüftungsausgang 238.

In der Figur 2 ist besonders zu erkennen, dass der Generator 204 weit über den Turm 222 hinausreicht. Der Schwingungsaufnehmer 228 reicht dabei ebenfalls weit über diesen Turm 222 hinaus. Er ist besonders nicht an dem Turm 222 angeordnet und auch nicht im Bereich oberhalb des Turms 220, insbesondere dort auch nicht im Bereich einer Verlängerung der Turmachse 240.

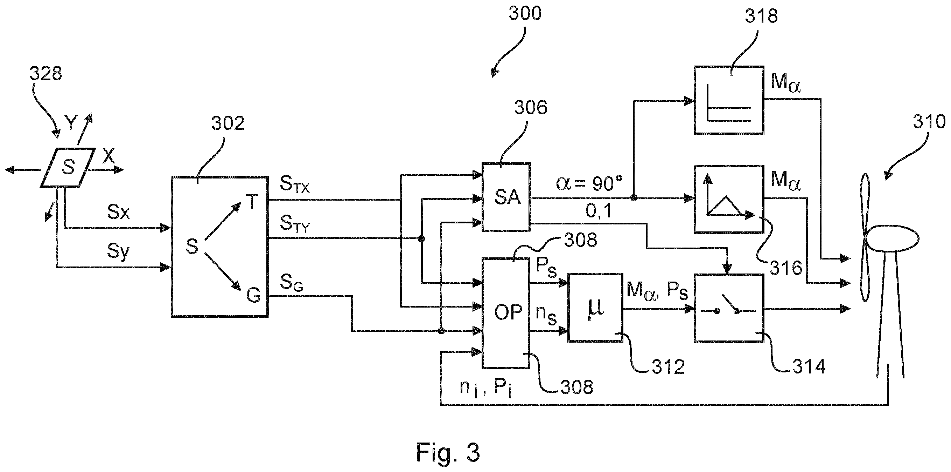

Der Schwingungsaufnehmer 228 ist dazu vorbereitet, zwei Schwingungsrichtungen aufzunehmen, nämlich zum einen in Längsrichtung der Generatorachse 214 und zum anderen in eine Richtung quer dazu, nämlich gemäß Figur 2 in die Zeichenebene hinein. Damit können sowohl für eine Turmschwingung des Turms 222 als auch eine Generatorschwingung des Generators 204 zwei aussagekräftige Schwingungsrichtungen erfasst werden. Eine mögliche Auswertung nebst Weiterverarbeitung ist in Figur 3 veranschaulicht.

Figur 3 zeigt somit schematisch eine Mess- und Steuerstruktur 300. Diese Mess- und Steuerstruktur 300 beginnt auf der dort dargestellten linken Seite mit der schematischen Darstellung eines Schwingungsaufnehmers 328, der dem Schwingungsaufnehmer 228 der Figur 2 entsprechen kann. Dieser Schwingungsaufnehmer 328, der als Beschleunigungssensor ausgebildet ist, kann zwei orthogonal zueinander stehende Schwingungsrichtungen erfassen, die hier als X und Y gekennzeichnet sind. Vorzugsweise und/oder im Falle eines bevorzugten Schwingungsaufnehmers 228 gemäß Figur 2 liegen diese beiden Richtungen X und Y in einer horizontalen Ebene. Die X-Richtung kann eine Schwingungsrichtung in Richtung der Generatorlängsachse bezeichnen und die Y-Richtung eine Richtung quer dazu.

Demnach gibt dieser Schwingungsaufnehmer 328 zwei Messsignale aus, nämlich jeweils eines für jede der beiden Richtungen X und Y. Diese beiden Schwingungssignale können als Längsschwingungssignal S_{X} und als Querschwingungssignal Sv bezeichnet werden. Diese beiden Signale werden dann an einen Trennblock 302 gegeben, in dem eine Trennschaltung eingebaut sein kann, oder in dem eine nachfolgend beschriebene Signaltrennung durch einen entsprechenden Mikroprozessor bzw. ein entsprechendes Auswerteprogramm durchgeführt wird. Somit werden beide Signale, also das Längsschwingungssignal S_{X} und das Querschwingungssignal Sv jeweils in ein Turmschwingungssignal und ein Generatorschwingungssignal aufgetrennt. Dazu ist in dem Trennblock 302 symbolisch dargestellt, dass sich ein Gesamtsignal S in ein Turmsignal T und ein Generatorsignal G auftrennt.

Der Trennblock 302 gibt dann als Ergebnis drei einzelne Signale aus, nämlich ein Turmlängsschwingungssignal S_{TX}, ein Turmquerschwingungssignal S_{TY}, und ein Generatorschwingungssignal S_{G}.

Als nächsten Schritt schlägt diese beispielhafte Mess- und Steuerungsstruktur 300 vor, in einer Schutzsteuerung, die in dem Schutzfunktionsblock 306 enthalten ist, diese drei Signale zu berücksichtigen, hier nämlich das Turmlängsschwingungssignal S_{TX}, das Turmquerschwingungssignal S_{TY}, und das Generatorschwingungssignal S_{G}.

Gleichzeitig ist noch ein Betriebssteuerungsblock 308 vorgesehen, der eine Arbeitspunktsteuerung enthält und ebenfalls sämtliche Informationen über die Schwingung erhält, nämlich die drei Signale, also das Turmlängsschwingungssignal S_{TX}, das Turmquerschwingungssignal S_{TY}, und das Generatorschwingungssignal S_{G}.

Ein von der Arbeitspunktsteuerung des Betriebssteuerungsblocks 308 vorgegebener Arbeitspunkt, um die Windenergieanlage in diesem Arbeitspunkt zu steuern, kann also abhängig von Schwingungsinformationen angepasst, verändert oder eingestellt werden, oder es kann auch festgestellt werden, dass eine Veränderung des Arbeitspunktes nicht erforderlich ist. Insoweit führt der Betriebssteuerungsblock 308 bzw. die Arbeitspunktsteuerung darin eine Steuerung der Windenergieanlage durch, nämlich zumindest insoweit, als dass sie eine Sollleistung Ps und eine Solldrehzahl ns ausgibt. Diese beiden Größen können im Wesentlichen den Arbeitspunkt der Windenergieanlage, der auch als Betriebspunkt bezeichnet werden kann, definieren. Dies kann besonders in Abhängigkeit einer erfassten Drehzahl nᵢ, und einer erfassten Leistung Pᵢ durchgeführt werden.

Die erfasste Leistung Pᵢ, und dann entsprechend auch die Sollleistung Ps bezeichnet insbesondere eine Abgabeleistung der Windenergieanlage, die schematisch als Windenergieanlage 310 dargestellt ist. Die Darstellung der Windenergieanlage 310 der Figur 3 ist auch insoweit nur schematisch zu verstehen, als dass die gezeigte Mess- und Steuerungsstruktur 300 grundsätzlich vollständig in der Windenergieanlage 310 enthalten sein kann.

Jedenfalls wird dieser Betriebspunkt durch die Vorgabe der Solldrehzahl ns und der Sollleistung Ps in die Hauptsteuereinrichtung 312 eingegeben. Die Hauptsteuereinrichtung 312 ist auch insoweit nur schematisch zu verstehen, weil in einer Hauptsteuereinrichtung einer Windenergieanlage grundsätzlich all dies durchgeführt werden kann, was in der Mess- und Steuerstruktur 300 erläutert wird. Jedenfalls kann die Hauptsteuereinrichtung 312 dann besonders Stellgrößen generieren, mit denen die Windenergieanlage 312 bzw. ihre Komponenten eingestellt werden.

Insoweit auch nur veranschaulichend dargestellt gibt die Hauptsteuereinrichtung 312 der Mess- und Steuerstruktur 300 der Figur 3 ein Drehmoment für jeweils einen Pitchmotor aus, und eine Sollleistung Ps. Das Drehmoment für den Pitchmotor wird hier als M_{α} bezeichnet. Es wird von der Hauptsteuereinrichtung 312 vorgegeben und kann verschiedene weitere Aspekte betreffen, die hier nicht weiter ausgeführt sind, wie bspw. eine Berücksichtigung der Belastung der betreffenden Pitchantriebe, und eine Berücksichtigung einer erforderlichen Verstellgeschwindigkeit, um nur zwei Beispiele zu nennen.

Auch die Sollleistung Ps ist nur veranschaulichend angegeben und ihre Umsetzung kann bspw. so durchgeführt werden, dass im Falle eines fremderregten Synchrongenerators ein entsprechender Erregerstrom dieser Fremderregung eingestellt wird. Außerdem oder alternativ kann die Einstellung der Sollleistung Ps über das Steuern von Statorströmen erreicht oder beeinflusst werden.

Jedenfalls werden diese beiden exemplarisch gezeigten Werte, nämlich das Antriebsmoment M_{α} jeweils eines Pitchmotors, und die vorgesehene Abgabeleistung Ps auf die Windenergieanlage 310 gegeben. Das soll bedeuten, dass diese Werte auf die entsprechenden Stelleinrichtungen gegeben werden. Das wären gemäß vorgenannten Beispiele der betreffende Pitchmotor, der betreffende Erregersteller und/oder ein dem Stator nachgeschalteter steuerbarer Gleichrichter.

Auf diese Art und Weise, also über die Arbeitspunktsteuerung im Betriebssteuerblock 308 und die weitere Umsetzung in der Hauptsteuereinrichtung 312, wird die Windenergieanlage 310 normalerweise betrieben. Tritt nun aber eine Störung auf, so kann eine Schutzsteuerung, wie sie in dem Schutzsteuerfunktionsblock 306 enthalten ist, aktiv werden. Eine solche Schutzsteuerfunktion überwacht hier die Schwingungen, nämlich das Turmlängsschwingungssignal S_{TX}, das Turmquerschwingungssignal S_{TY}, und das Generatorschwingungssignal S_{G}.

Überschreitet eines dieser Signale einen entsprechenden Grenzwert, so wird die Schutzsteuerung aktiviert und dies führt zunächst dazu, dass die normale Steuerung ausgehebelt wird. Das ist durch den Deaktivierungsblock 314 veranschaulicht. Der Schutzfunktionsblock 306 kann in diesem Fall nämlich den Deaktivierungsblock 413 ansteuern und die Normalsteuerung gemäß dem Betriebssteuerungsblock 308 und der Hauptsteuereinrichtung 312 deaktivieren. Das wird durch den in dem Deaktivierungsblock 314 symbolisch dargestellten geöffneten Schalter angedeutet.

Gleichzeitig führt dann die Schutzsteuerung des Schutzfunktionsblock 306 eine eigene Steuerung der Windenergieanlage 310 durch, um diese in einen sicheren Arbeitspunkt zu bringen. Im einfachsten Fall, der hier auch veranschaulicht ist, wird hierzu die Windenergieanlage angehalten, somit nämlich möglichst schnell auf die Drehzahl null gesteuert. Dazu ist es in dem veranschaulichend Beispiel auch notwendig, den Blattwinkel in Fahnenstellung zu drehen, was in Figur 3 als 90 Grad veranschaulicht ist. Üblicherweise ist die Fahnenstellung nicht genau 90 Grad, liegt aber in der Nähe, so dass der Wert von α = 90 Grad veranschaulichend ein sinnvoller Wert ist. Natürlich können auch weitere Steuerungen durchgeführt werden, wie auch das Reduzieren der Abgabeleistung. Das ist hier aber zur besseren Übersichtlichkeit halber nicht weiter erläutert.

Jedenfalls führt die Schutzsteuerung des Schutzfunktionsblock 306 ein Verfahren der Rotorblätter in Fahnenstellung durch und erzeugt dafür über den Hauptblock 316 die Erzeugung eines Drehmoments für jeweils einen Pitchmotor durch. Der Hauptblock 316 kann dafür bspw. über die Zeit ein zunächst ansteigendes und dann wieder abfallendes Drehmoment für den betreffenden Pitchmotor erzeugen bzw. vorgeben. Das ist entsprechend in dem Hauptblock 316 veranschaulicht.

Vorzugsweise ist aber diese Schutzsteuerung auch als ausfallsichere Steuerung ausgebildet und kann dafür eine Hauptsteuerung und eine Nebensteuerung aufweisen. Der Hauptblock 316 kann insoweit veranschaulichend als Hauptsteuerung angesehen werden bzw. er kann repräsentativ für weitere Hauptsteuerfunktionen stehen, die die Schutzsteuerung ggf. durchführen muss. Kann diese Hauptsteuerung bzw. der dafür repräsentativ gezeigte Hauptblock 316 die gewünschte Steuerung, also das gewünschte Erzeugen des Drehmomentes für den Pitchmotor nicht durchführen, so steht ein Nebenblock 318 als veranschaulichendes Element für eine Nebensteuerung zur Verfügung, die nämlich dann die Tätigkeit übernimmt, die die Hauptsteuerung aufgrund des Ausfalls nicht mehr leisten kann.

Die Nebensteuerung und damit veranschaulichend der Nebenblock 318 kann dabei dazu vorbereitet sein, die durchzuführende Steuerung einfacher auszuführen. Das wird hier dadurch veranschaulicht, dass der Nebenblock 318 zwar ebenfalls ein Drehmoment M_{α} erzeugt bzw. vorgibt, um damit einen Pitchmotor anzusteuern, dass diese Drehmomentvorgabe allerdings weniger dezidiert durchgeführt wird. Veranschaulichend weist der Nebenblock 318 dazu nämlich ein symbolisches Diagramm auf, das andeuten soll, dass hier das Drehmoment M_{α} einfach auf einen festen Wert gesetzt wird. Das betreffende Rotorblatt kann dann in seine Fahnenstellung drehen und diese Ansteuerung, also das Erzeugen oder Vorgeben des Drehmomentes für den Pitchmotor endet, wenn das Rotorblatt seine Fahnenstellung erreicht hat und dabei einen Endschalter betätigt. Dieser Endschalter führt dann dazu, dass kein weiteres Drehmoment mehr auf den betreffenden Pitchmotor gegeben wird.

Die Hauptsteuerung und die Nebensteuerung, hier durch den Hauptblock 316 bzw. den Nebenblock 318 veranschaulicht, können aber auch gleich ausgebildet sein und gleichzeitig und parallel arbeiten, indem bspw. beide im Störfall eine Drehmomentanforderung an die Pitchmotoren oder eine Pitchmotorensteuerung geben, oder nur ein Abschaltsignal ausgeben, das die Pitchsteuerung eigenständig ausführen kann, weil das bspw. entsprechend vorprogrammiert ist.

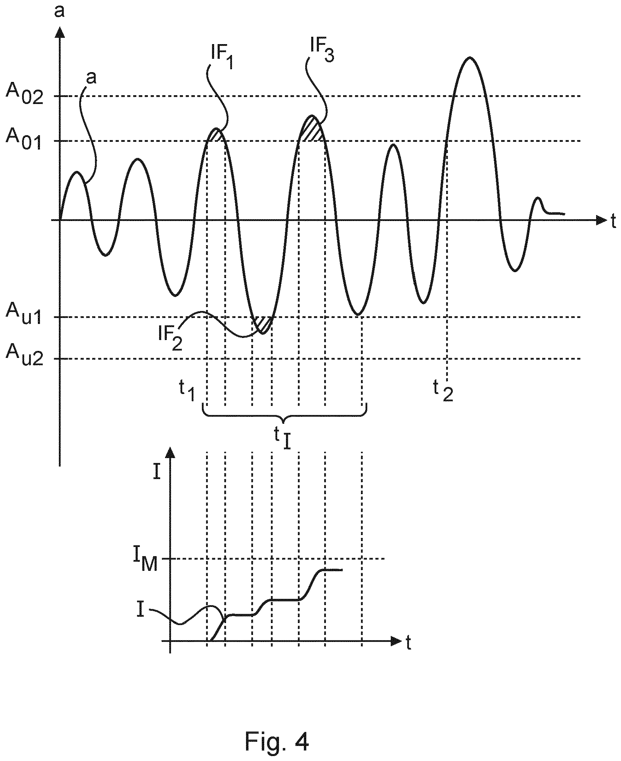

Figur 4 zeigt einen schematischen Verlauf einer Schwingung a über die Zeit. Diese veranschaulichend dargestellte Schwingung a kann jeweils einen zeitlichen Verlauf einer Beschleunigung darstellen und sowohl veranschaulichend für eine Turmschwingung als auch veranschaulichend für eine Generatorschwingung sein. Besonders können sie sich auf das Turmlängsschwingungssignal S_{TX}, das Turmquerschwingungssignal S_{TY}, und das Generatorschwingungssignal S_{G} beziehen und dazu bspw. die jeweilige Beschleunigung zeigen. Diese drei Schwingungen können sich zwar in vielen Eigenschaften unterscheiden, aber in dem Diagramm der Figur 4 sollen besonders zwei mögliche Kriterien erläutert werden, die zum Erkennen einer Störung führen können. Und diese Kriterien werden für die drei Schwingungsarten in dergleichen Art und Weise vorgeschlagen.

Es ist auch zu beachten, was nicht nur für diese veranschaulichende Figur 4 gilt, sondern generell, dass die betrachtete Schwingung eine Turmschwingung, sowohl quer als auch längs, oder eine Generatorschwingung sein kann. Dabei kann besonders der Wert des jeweiligen Kriteriums bzw. der Kriterien, besonders der Grenzwerte, entsprechend angepasst sein.

Die Figur 4 zeigt nun den Schwingungsverlauf a, der zunächst eine Schwingung mit kleiner Amplitude zeigt, die dann ansteigt. Zum Zeitpunkt t₁ erreicht diese Schwingung einen ersten oberen Schwingungsgrenzwert Aₒ₁. Dieser ist mit einer waagerechten gestrichelten Linie eingezeichnet und dazu existiert auch ein erster unterer Schwingungsgrenzwert Aᵤ₁, der vorzugsweise dem negativen Wert des ersten oberen Schwingungsgrenzwertes Aₒ₁, entspricht. Vorzugswiese gilt also Aᵤ₁ = -Aₒ₁. Diese beiden ersten Schwingungsgrenzwerte können somit ein erstes Schwingungstoleranzband bilden. Sie können jeweils einen ersten Generatorschwingungsgrenzwert oder einen ersten Turmschwingungsgrenzwert, bzw. einen ersten Turmlängsschwingungsgrenzwert oder einen ersten Turmquerschwingungsgrenzwert bilden.

Zu diesem Zeitpunkt t₁, wenn die Schwingung den ersten oberen Grenzwert überschreitet, das erste Schwingungstoleranzband also verlässt, wird noch nicht auf eine Störung erkannt, sondern es wird dann das Überschreiten dieses Grenzwertes, gleiches gilt für das Unterschreiten des ersten unteren Schwingungsgrenzwertes, was ein weiteres Verlassen des ersten Schwingungstoleranzband es ist, aufintegriert. Dies ist in der Figur 4 als schraffierte Integralfläche IF₁ veranschaulicht. Eine solche Integration wird dann über einen vorbestimmten Integrationszeitraum tₗ fortgesetzt, der auch synonym als erster Prüfzeitraum bezeichnet werden kann. Innerhalb dieses Integrationszeitraums tₗ setzt sich nun die Schwingung fort und unterschreitet dann den ersten unteren Schwingungsgrenzwert Aᵤ₁ verlässt also wieder das erste Schwingungstoleranzband. Bei diesem Unterschreiten ergibt sich dann ebenfalls ein aufzuintegrierender Wert, was als zweite Integrationsfläche IF₂ veranschaulicht ist. Auch das wird zu dem aufintegrierten Wert der ersten Integrationsfläche IF₁ hinzu addiert. Die Schwingung setzt sich dann fort und überschreitet abermals in dem gezeigten Beispiel den ersten oberen Schwingungsgrenzwert, so dass das Aufintegrieren fortgesetzt wird, nämlich mit dem Inhalt der dritten Integrationsfläche IF₃.

Dieses Aufintegrieren ist in Figur 4 zudem in einem Teildiagramm veranschaulicht, das den Verlauf des Überschreitungsintegralwertes I, der auch als synonym Überschreitungssumme bezeichnet werden kann, als Ergebnis dieser Aufintegration darstellt, nämlich zeichnerisch unmittelbar unterhalb des betrachteten Integrationszeitraums tₗ. Würde dieser Überschreitungsintegralwert I den als waagerechte gestrichelte Linie eingezeichneten Referenzintegralwert I_{M} erreichen, der auch synonym als Maximalsumme bezeichnet werden kann, würde die Schutzsteuerung auf eine Störung erkennen und insbesondere das Anhalten der Windenergieanlage mit einer Blattnotverstellung auslösen. Im gezeigten Beispiel erreicht der Überschreitungsintegralwert I allerdings nicht den vorgebbaren Referenzintegralwert I_{M}. Es wird also nicht auf eine Störung erkannt, weil die Schwingung nämlich im gezeigten Beispiel wieder etwas abklingt und dann innerhalb des Integrationszeitraums tₗ den ersten unteren Schwingungsgrenzwert Aᵤ₁ nicht mehr unterschreitet und auch den ersten oberen Schwingungsgrenzwert Aₒ₁, nicht mehr überschreitet, also im erste Schwingungstoleranzband bleibt.

Statt dem gezeigten Aufintegrieren kommt auch ein Aufsummieren, also Zählen, in Betracht. Übertragen auf die Situation der Fig. 4 könnte z.B. der Referenzintegralwert, also die Maximalsumme, den Wert 4 aufweisen. Hier wurde das erste Schwingungstoleranzband nur dreimal verlassen, so dass der Wert der Überschreitungssumme 3 beträgt und damit noch nicht auf eine Störung erkannt wurde.

Sollte der Schwingungsverlauf, nämlich die betrachtete Beschleunigung a, später nochmals den ersten oberen Schwingungsgrenzwert Aₒ₁, überschreiten oder den ersten unteren Schwingungsgrenzwert Aᵤ₁ unterschreiten, würde dann eine Integration erneut von null starten und damit auch ein neuer Integrationszeitraum tₗ starten. Alternativ kann der Überschreitungsintegralwert, bzw. die Überschreitungssumme allmählich reduziert werden. Z.B. kann die Überschreitungssumme in dem Fall, dass das Verlassen des ersten Toleranzbandes nur gezählt wird, pro Tag um den Wert 1 reduziert werden.

Weiterhin ist ein zweiter oberer Schwingungsgrenzwert Aₒ₂ vorgesehen. Dieser ist ebenfalls durch eine gestrichelte waagerechte Linie gekennzeichnet und dazu existiert auch ein Pendant, nämlich der zweite untere Schwingungsgrenzwert Aᵤ₂. Auch hier wird vorzugsweise vorgeschlagen, dass der zweite untere Schwingungsgrenzwert Aᵤ₂ dem negativen Wert des zweiten oberen Schwingungsgrenzwertes Aᵤ₂ entspricht (Aᵤ₂ = -Aₒ₂). Diese beiden zweiten Schwingungsgrenzwerte können somit ein zweites Schwingungstoleranzband bilden. Sie können jeweils einen zweiten Generatorschwingungsgrenzwert oder einen zweiten Turmschwingungsgrenzwert, bzw. einen zweiten Turmlängsschwingungsgrenzwert oder einen zweiten Turmquerschwingungsgrenzwert bilden.

In der Figur 4 wird beispielhaft zum Zeitpunkt t₂ der zweite obere Schwingungsgrenzwert Aₒ₂ überschritten. Das führt dann unmittelbar, ohne dass eine Aufintegration durchgeführt wird, zum Erkennen einer Störung. Dann, also zum Zeitpunkt t₂, wird ein Anhalten der Windenergieanlage besonders über eine Notverstellung der Rotorblätter in Fahnenstellung ausgeführt. Kurz vor Erreichen des zweiten oberen Schwingungsgrenzwertes Aₒ₂ überschreitet die betrachtete Beschleunigung a der Schwingung zwar auch zunächst den ersten oberen Schwingungsgrenzwert Aᵤ₁, was zu einem erneuten Start des Aufintegrierens führt. Diese Aufintegration ist hier der Einfachheit halber nicht dargestellt, weil kurz danach zum Zeitpunkt t₂ das zweite Kriterium erreicht wird und das hier erläutert werden soll.

Durch das Abschalten der Windenergieanlage ebbt dann auch die Schwingung ab, was in der Figur 4 ebenfalls angedeutet ist.

In gleicher Weise würde auch das Unterschreiten des zweiten unteren Schwingungsgrenzwertes Aᵤ₂ zum Erkennen einer Störung führen und zum Auslösen des Anhaltens der Windenergieanlage besonders über eine Notverstellung der Rotorblätter.

## Patentansprüche

1. Verfahren zum Betreiben einer getriebelosen Windenergieanlage, und die getriebelose Windenergieanlage umfasst
- einen eine Generatorachse aufweisenden Generator zum Erzeugen elektrischer Leistung aus Wind,
- eine Gondel zum Tragen des Generators und
- einen eine Turmachse aufweisenden Turm zum Tragen der Gondel,
und das Verfahren umfasst die Schritte
- Erfassen wenigstens einer Turmschwingung mit einem Schwingungsaufnehmer,
- Erfassen einer durch wenigstens einen elektrischen Fehler ausgelösten mechanischen Generatorschwingung mit demselben Schwingungsaufnehmer und
- Steuern der Windenergieanlage in Abhängigkeit der erfassten Turmschwingung und der erfassten Generatorschwingung, wobei
der Schwingungsaufnehmer
- als Beschleunigungssensor ausgebildet ist, und
- eine Beschleunigung in wenigstens zwei Richtungen erfasst.

2. Verfahren nach Anspruch1,
**dadurch gekennzeichnet, dass**
der Schwingungsaufnehmer
- an dem Generator, insbesondere an einem Stator des Generators,
- an einem den Stator des Generators tragenden Statorträger,
- in einem vorderen Teil der Gondel, und/oder
- vor der Turmachse angeordnet ist.

3. Verfahren nach Anspruch 1 oder 2,
**dadurch gekennzeichnet, dass**
ein Längsschwingungssignal und ein Querschwingungssignal erfasst wird, wobei
- das Längsschwingungssignal in eine Längsrichtung der Generatorachse gerichtet ist, und
- das Querschwingungssignal in eine Richtung quer zur Längsrichtung gerichtet ist, wobei insbesondere
- auch das Querschwingungssignal als eine Schwingung in einer horizontalen Ebene erfasst wird.

4. Verfahren nach einem der vorstehenden Ansprüche,
**dadurch gekennzeichnet, dass**
- wenigstens ein von dem Schwingungsaufnehmer aufgenommenes Schwingungssignal frequenzabhängig in ein Turmschwingungssignal und ein Generatorschwingungssignal aufgetrennt wird, wobei insbesondere
- eine Filtereinrichtung verwendet wird, und
- unterhalb einer vorgebbaren Trennfrequenz liegende Frequenzanteile als Turmschwingungssignal verwendet werden und
- oberhalb der Trennfrequenz liegende Frequenzanteile als Generatorschwingungssignal verwendet werden.

5. Verfahren nach einem der vorstehenden Ansprüche,
**dadurch gekennzeichnet, dass**
als wenigstens eine Turmschwingung
- eine Turmlängsschwingung und
- eine Turmquerschwingung erfasst wird.

6. Verfahren nach einem der vorstehenden Ansprüche,
**dadurch gekennzeichnet, dass**
das Steuern der Windenergieanlage funktional aufgeteilt ist in
- eine Arbeitspunktsteuerung zum Steuern der Windenergieanlage in einem Arbeitspunkt und
- eine der Arbeitspunktsteuerung hierarchisch übergeordnete Schutzsteuerung zum Überprüfen von Schutzfunktionen der Windenergieanlage, wobei
- die Schutzsteuerung auf Störkriterien prüft und
- bei Erkennen eines vorbestimmten Störkriteriums die Arbeitspunktsteuerung übernimmt und
- in Abhängigkeit des erkannten Störkriteriums einen gesicherten Arbeitspunkt anfährt, insbesondere eine Drehung des Rotors der Windenergieanlage reduziert oder anhält.

7. Verfahren nach einem der vorstehenden Ansprüche,
**dadurch gekennzeichnet, dass**
- eine bzw. die Schutzsteuerung als ausfallsichere Steuerung ausgebildet ist, und/oder
- die Schutzsteuerung eine Haupt- und eine Nebensteuerung aufweist, wobei
- die Hauptsteuerung die Schutzsteuerung ausführt und
- die Nebensteuerung die Schutzteuerung oder einen Teil davon übernimmt, wenn die Hauptsteuerung ganz oder teilweise ausfällt, oder gleichzeitig ausgeführt wird.

8. Verfahren nach einem der vorstehenden Ansprüche,
**dadurch gekennzeichnet, dass**
- auf eine Störung erkannt wird, wenn eine der erfassten Turmschwingungen einen vorbestimmten Turmschwingungsgrenzwert überschreitet, insbesondere wenn
- eine bzw. die Turmlängsschwingung einen vorbestimmten Turmlängsschwingungsgrenzwert überschreitet und/oder
- eine bzw. die Turmquerschwingung einen vorbestimmten Turmquerschwingungsgrenzwert überschreitet, und/oder
- auf eine Störung erkannt wird, wenn die erfasste Generatorschwingung einen vorbestimmten Generatorschwingungsgrenzwert überschreitet.

9. Verfahren nach einem der vorstehenden Ansprüche,
**dadurch gekennzeichnet, dass**
für die Turmlängsschwingung, die Turmquerschwingung und/oder die Generatorschwingung jeweils ein Schwingungsverlauf überwacht wird, und
- für den Schwingungsverlauf jeweils geprüft wird, ob er ein erstes Schwingungstoleranzband verlässt, und
- jedes Verlassen des ersten Schwingungstoleranzbandes zu einer Überschreitungssumme summiert oder integriert wird, und
- wenn die Überschreitungssumme in einem vorbestimmten ersten Prüfzeitraum eine vorbestimmte Maximalsumme erreicht oder überschreitet,
- die Windenergieanlage wegen einer Störung angehalten wird, oder
- eine Schwingungswarnung ausgegeben wird und ein Anhalten der Windenergieanlage vom weiteren Verlauf des Schwingungsverlaufs abhängt.

10. Verfahren nach Anspruch 9,
**dadurch gekennzeichnet, dass**
- zum Anhalten der Windenergieanlage in Abhängigkeit vom weiteren Verlauf des Schwingungsverlaufs
- in einem ersten Folgeschritt die Überschreitungssumme auf null gesetzt wird und
- in einem zweiten Folgeschritt jedes Verlassen des ersten Schwingungstoleranzbandes erneut zur Überschreitungssumme summiert oder integriert wird, bis erneut eine Schwingungswarnung ausgegeben wird, wobei
- dann der erste und zweite Folgeschritt wiederholt werden,
- die dabei aufgetretenen Schwingungswarnungen gezählt werden und
- überprüft wird, ob die in einem vorbestimmten zweiten Prüfzeitraum, der länger ist als der erste Prüfzeitraum, die Anzahl Schwingungswarnungen eine vorbestimmte Warnzahlgrenze erreicht hat und davon abhängig die Windenergieanlage wegen einer Störung angehalten wird oder weiterbetrieben wird, und/oder dass
- überprüft wird, ob überhaupt die vorbestimmte oder eine zweite Warnzahlgrenze erreicht wird, während außerdem die Anzahl Schwingungswarnungen jeweils nach Ablauf einer Dauer eines Reduzierungsintervalls um einen Zähler reduziert werden, und davon abhängig die Windenergieanlage wegen einer Störung angehalten wird oder weiterbetrieben wird.

11. Verfahren nach Anspruch 9 oder 10,
**dadurch gekennzeichnet, dass**
auf eine Störung erkannt und die Windenergieanlage angehalten wird, wenn der Schwingungsverlauf ein zweites Schwingungstoleranzband, das größer ist, als das erste Toleranzband, einmalig verlässt.

12. Getriebelose Windenergieanlage, umfassend
- einen eine Generatorachse aufweisenden Generator zum Erzeugen elektrischer Leistung aus Wind, wobei der Generator durch einen aerodynamischen Rotor mit einem oder mehreren Rotorblättern antreibbar ist,
- eine Gondel zum Tragen des Generators,
- einen Turm zum Tragen der Gondel,
- einen Schwingungsaufnehmer zum Erfassen einer Turmschwingung, wobei der Schwingungsaufnehmer auch vorbereitet ist zum Erfassen einer durch wenigstens einen elektrischen Fehler ausgelösten mechanischen Generatorschwingung, und
- eine Steuereinrichtung zum Steuern der Windenergieanlage in Abhängigkeit der erfassten Turmschwingung und der erfassten Generatorschwingung, wobei
der Schwingungsaufnehmer
- als Beschleunigungssensor ausgebildet ist, und
- dazu vorbereitet ist, eine Beschleunigung in wenigstens zwei Richtungen zu erfassen.

13. Windenergieanlage nach Anspruch 12,
**dadurch gekennzeichnet, dass**
ein Verfahren nach einem der Ansprüche 1 bis 11 implementiert ist, insbesondere dass das Verfahren auf der Steuereinrichtung implementiert ist.

14. Windenergieanlage nach einem der Ansprüche 12 oder 13,
**dadurch gekennzeichnet, dass**
der Schwingungsaufnehmer
- an dem Generator, insbesondere an einem Stator des Generators,
- an einem den Generator tragenden Generatorträger und/oder
- in einem vorderen Teil der Gondel angeordnet ist.

## Claims

1. A method for operating a gearless wind turbine, and the gearless wind turbine comprises
- a generator for generating electrical power from wind, the generator having a generator axis,
- a nacelle for supporting the generator, and
- a tower for supporting the nacelle, the tower having a tower axis,
and the method comprises the steps
- sensing at least one tower vibration by means of a vibration pickup,
- sensing a mechanical generator vibration, caused by at least one electrical fault, by means of the same vibration pickup, and
- controlling the wind turbine in dependence on the sensed tower vibration and the sensed generator vibration, wherein
the vibration pickup
- is realized as an acceleration sensor, and
- an acceleration is sensed in at least two directions.

2. The method as claimed in claim 1,
**characterized in that**
the vibration pickup is arranged
- on the generator, in particular on a stator of the generator,
- on a stator carrier that supports the stator of the generator,
- in a front part of the nacelle, and/or
- in front of the tower axis.

3. The method as claimed in claim 1 or 2,
**characterized in that**
a longitudinal vibration signal and a transverse vibration signal are sensed, wherein
- the longitudinal vibration signal is directed in a longitudinal direction of the generator axis, and
- the transverse vibration signal is directed in a direction transverse to the longitudinal direction, wherein, in particular,
- also the transverse vibration signal is sensed as a vibration in a horizontal plane.

4. The method as claimed in any one of the preceding claims,
**characterized in that**
- at least one vibration signal picked up by the vibration pickup is separated, in dependence on frequency, into a tower-vibration signal and a generator-vibration signal, wherein, in particular,
- a filter means is used, and
- frequency components lying below a predefinable separation frequency are used as a tower-vibration signal and
- frequency components lying above the separation frequency are used as a generator-vibration signal.

5. The method as claimed in any one of the preceding claims,
**characterized in that**
- a tower longitudinal vibration and
- a tower transverse vibration
are sensed as at least one tower vibration.

6. The method as claimed in any one of the preceding claims,
**characterized in that**
the controlling of the wind turbine is functionally divided into
- a working-point control for controlling the wind turbine at a working point, and
- a protective control, which is hierarchically of a higher order than the working-point control, for checking protective functions of the wind turbine, wherein
- the protective control checks for disturbance criteria and,
- if a predetermined disturbance criterion is identified, take over the working-point control and,
- in dependence on the disturbance criterion that is sensed, moves to a safe working point, in particular reduces or stops a rotation of the rotor of the wind turbine.

7. The method as claimed in any one of the preceding claims,
**characterized in that**
- a, or the, protective control is realized as a fail-safe control, and/or
- the protective control has a main and a secondary control, wherein
- the main control executes the protective control, and
- the secondary control takes over the protective control or a part thereof if the main control fails completely or partially, or is executed simultaneously.

8. The method as claimed in any one of the preceding claims,
**characterized in that**
- a disturbance is identified if one of the sensed tower vibrations exceeds a predetermined tower-vibration limit value, in particular if
- a, or the, tower longitudinal vibration exceeds a predetermined tower longitudinal-vibration limit value, and/or
- a, or the, tower transverse vibration exceeds a predetermined tower transverse-vibration limit value, and/or
- a disturbance is identified if the sensed generator vibration exceeds a predetermined generator-vibration limit value.

9. The method as claimed in any one of the preceding claims,
**characterized in that**,
for the tower longitudinal vibration, the tower transverse vibration and/or the generator vibration, a vibration characteristic is monitored in each case, and
- for the vibration characteristic it is checked in each case whether it departs from a first vibration tolerance band, and
- each departure from the first vibration tolerance band is summed or integrated to form an exceedance sum, and
- if the exceedance sum attains or exceeds a predetermined maximum sum in a predetermined first check period,
- the wind turbine is stopped due to a disturbance, or
- a vibration warning is output and a stopping of the wind turbine depends on the further variation of the vibration characteristic.

10. The method as claimed in claim 9,
**characterized in that**,
- for the purpose of stopping the wind turbine in dependence on the further variation of the vibration characteristic,
- in a first subsequent step, the exceedance sum is set to zero and,
- in a second subsequent step, each departure from the first vibration tolerance band is again summed or integrated to form the exceedance sum until a vibration warning is again output, wherein,
- then the first and second subsequent steps are repeated,
- the vibration warnings that occur during this are counted, and
- it is checked whether, in a predetermined second check period that is longer than the first check period, the number of vibration warnings has attained a predetermined warning number limit and, depending on this, the wind turbine is stopped due to a disturbance or continues to be operated, and/or that
- it is checked whether the predetermined or a second warning number limit is attained at all, while in addition the number of vibration warnings is in each case reduced by one counter following expiry of a duration of a reduction interval and, depending on this, the wind turbine is stopped due to a disturbance or continues to be operated.

11. The method as claimed in claim 9 or 10,
**characterized in that**
a disturbance is identified and the wind turbine is stopped if the vibration characteristic departs once from a second vibration tolerance band, which is broader than the first tolerance band.

12. A gearless wind turbine, comprising
- a generator having a generator axis for generating electrical power from wind, wherein the generator can be driven by an aerodynamic rotor having one or more rotor blades,
- a nacelle for supporting the generator,
- a tower for supporting the nacelle,
- a vibration pickup for sensing a tower vibration, wherein the vibration pickup is also configured for sensing a mechanical generator vibration triggered by at least one electrical fault, and
- a control means for controlling the wind turbine in dependence on the sensed tower vibration and the sensed generator vibration, wherein
the vibration pickup
- is realized as an acceleration sensor, and
- is configured to sense an acceleration in at least two directions.

13. The wind turbine as claimed in claim 12,
**characterized in that**
a method as claimed in any one of claims 1 to 11 is implemented, in particular the method is implemented on the control means.

14. The wind turbine as claimed in any one of claims 12 or 13,
**characterized in that**
the vibration pickup is arranged
- on the generator, in particular on a stator of the generator,
- on a generator carrier that supports the generator, and/or
- in a front part of the nacelle.

## Revendications

1. Procédé pour faire fonctionner une éolienne sans transmission, laquelle éolienne sans transmission comprend
- un générateur, présentant un axe de générateur, destiné à générer une puissance électrique à partir du vent,
- une nacelle destinée à supporter le générateur, et
- un mât présentant un axe de mât, destiné à supporter la nacelle, et lequel procédé comprend les étapes
- de détection d'au moins une oscillation de mât avec une sonde d'oscillations,
- de détection d'une oscillation de générateur mécanique déclenchée par au moins une anomalie électrique avec la même sonde d'oscillations, et
- de commande de l'éolienne en fonction de l'oscillation de mât détectée et de l'oscillation de générateur détectée, dans lequel
la sonde d'oscillations
- est réalisée en tant que capteur d'accélération, et
- détecte une accélération dans au moins deux directions.

2. Procédé selon la revendication 1,
**caractérisé en ce que**
la sonde d'oscillations est disposée
- sur le générateur, en particulier sur un stator du générateur,
- sur un support de stator supportant le stator du générateur,
- dans une partie avant de la nacelle, et/ou
- devant l'axe de mât.

3. Procédé selon la revendication 1 ou 2,
**caractérisé en ce que**
un signal d'oscillation longitudinale et un signal d'oscillation transversale sont détectés, dans lequel
- le signal d'oscillation longitudinale est dirigé dans une direction longitudinale de l'axe de générateur, et
- le signal d'oscillation transversale est dirigé dans une direction de manière transversale par rapport à la direction longitudinale, dans lequel en particulier
- le signal d'oscillation transversale est détecté également en tant qu'une oscillation dans un plan horizontal.

4. Procédé selon l'une quelconque des revendications précédentes,
**caractérisé en ce que**
- au moins un signal d'oscillation enregistré par la sonde d'oscillations est divisé en fonction de la fréquence en un signal d'oscillation de mât et en un signal d'oscillation de générateur, dans lequel en particulier
- un dispositif de filtration est utilisé, et
-- des composantes de fréquence situées en dessous d'une fréquence de coupure pouvant être prédéfinie sont utilisées en tant que signal d'oscillation de mât, et
-- des composantes de fréquence situées au-dessus de la fréquence de coupure sont utilisées en tant que signal d'oscillation de générateur.

5. Procédé selon l'une quelconque des revendications précédentes,
**caractérisé en ce que**
sont détectées en tant qu'au moins une oscillation de mât
- une oscillation longitudinale de mât et
- une oscillation transversale de mât.

6. Procédé selon l'une quelconque des revendications précédentes,
**caractérisé en ce que**
la commande de l'éolienne est répartie de manière fonctionnelle en
- une commande de point de travail destinée à commander l'éolienne dans un point de travail, et
- une commande de protection supérieure hiérarchiquement à la commande de point de travail, destinée à surveiller des fonctions de protection de l'éolienne, dans lequel
- la commande de protection examine des critères de dysfonctionnement, et
-- assure la commande de point de travail en cas d'identification d'un critère de dysfonctionnement prédéfini, et
-- se déplace sur un point de travail sécurisé en fonction du critère de dysfonctionnement identifié, en particulier réduit ou arrête une rotation du rotor de l'éolienne.

7. Procédé selon l'une quelconque des revendications précédentes,
**caractérisé en ce que**
- une ou la commande de protection est réalisée en tant que commande à sûreté intégrée,
et/ou
- la commande de protection présente une commande principale et une commande secondaire, dans lequel
-- la commande principale exécute la commande de protection, et
-- la commande auxiliaire assure la commande de protection ou une partie de celle-ci lorsque la commande principale tombe en panne en totalité ou en partie, ou est exécutée simultanément.

8. Procédé selon l'une quelconque des revendications précédentes,
**caractérisé en ce que**
- un dysfonctionnement est identifié lorsqu'une des oscillations de mât détectées dépasse une valeur limite d'oscillation de mât prédéfinie, en particulier lorsque
-- une oscillation ou l'oscillation longitudinale de mât dépasse une valeur limite d'oscillation longitudinale de mât prédéfinie, et/ou
-- une oscillation ou l'oscillation transversale de mât dépasse une valeur limite d'oscillation transversale de mât prédéfinie, et/ou
- un dysfonctionnement est détecté lorsque l'oscillation de générateur détectée dépasse une valeur limite d'oscillation de générateur prédéfinie.

9. Procédé selon l'une quelconque des revendications précédentes,
**caractérisé en ce que**
pour l'oscillation longitudinale de mât, l'oscillation transversale de mât et/ou l'oscillation de générateur, une courbe d'oscillations est respectivement surveillée, et
- il est vérifié pour la courbe d'oscillations si elle quitte une première bande de tolérance d'oscillation, et
-- toute sortie de la première bande de tolérance d'oscillation est ajoutée ou intégrée en une somme de dépassement, et
-- lorsque la somme de dépassement atteint ou dépasse une somme maximale prédéfinie dans une première période de contrôle prédéfinie,
--- l'éolienne est arrêtée en raison d'un dysfonctionnement, ou
--- un avertissement d'oscillation est émis et un arrêt de l'éolienne dépend de l'évolution ultérieure de la courbe d'oscillations.

10. Procédé selon la revendication 9,
**caractérisé en ce que**
- pour arrêter l'éolienne en fonction de l'évolution ultérieure de la courbe d'oscillations
-- la somme de dépassement est placée sur zéro dans une première étape ultérieure,
-- toute sortie de la première bande de tolérance est à nouveau ajoutée ou intégrée en la somme de dépassement dans une deuxième étape ultérieure jusqu'à ce qu'un avertissement d'oscillation soit à nouveau émis, dans lequel
--- alors la première et la deuxième étape ultérieure sont répétées,
--- les avertissements d'oscillation survenus dans ce cadre sont comptés et
---- il est surveillé si, dans une deuxième période de contrôle, qui est plus longue que la première période de contrôle, le nombre d'avertissements d'oscillation a atteint une limite de nombre d'avertissements prédéfinie et, sur cette base, l'éolienne est arrêtée en raison d'un dysfonctionnement ou elle continue à fonctionner, et/ou que
---- il est vérifié si la limite de nombre d'avertissements prédéfinie ou une deuxième limite de nombre d'avertissements est principalement atteinte, tandis que par ailleurs le nombre d'avertissements d'oscillation est réduit respectivement après l'écoulement d'une durée d'un intervalle de réduction d'un numérateur, et, sur cette base, l'éolienne est arrêtée en raison d'un dysfonctionnement ou elle continue à fonctionner.

11. Procédé selon la revendication 9 ou 10,
**caractérisé en ce que**
un dysfonctionnement est identifié et l'éolienne est arrêtée lorsque la courbe d'oscillations quitte une fois une deuxième bande de tolérance d'oscillation, qui est supérieure à la première bande de tolérance.

12. Eolienne sans transmission comprenant
- un générateur, présentant un axe de générateur, destiné à produire de la puissance électrique à partir du vent, dans laquelle le générateur peut être entraîné par un rotor aérodynamique avec une ou plusieurs pales de rotor,
- une nacelle destinée à supporter le générateur,
- un mât destiné à supporter la nacelle,
- une sonde d'oscillations destinée à détecter une oscillation de mât, dans laquelle la sonde d'oscillations est également préparée pour détecter une oscillation de générateur mécanique déclenchée par au moins une anomalie électrique, et
- un dispositif de commande destiné à commander l'éolienne en fonction de l'oscillation de mât détectée et de l'oscillation de générateur détectée, dans laquelle
la sonde d'oscillations
- est réalisée en tant que capteur d'accélération, et
- est préparée pour détecter une accélération dans au moins deux directions.

13. Eolienne selon la revendication 12,
**caractérisée en ce**
**qu'**un procédé selon l'une quelconque des revendications 1 à 11 est mis en oeuvre, en particulier que le procédé est mis en œuvre sur le dispositif de commande.

14. Eolienne selon l'une quelconque des revendications 12 ou 13,
**caractérisée en ce que**
la sonde d'oscillations est disposée
- sur le générateur, en particulier sur un stator du générateur,
- sur un support de générateur supportant le générateur, et/ou
- dans une partie avant de la nacelle.
